# EUROPEAN PATENT APPLICATION

(11) **EP 1 605 695 A1**
(43) Date of publication of application: **14.12.2005**
(21) Application number: 04716744.0
(22) Date of filing: 03.03.2004
(51) Int. Cl.: H04N 5/91, G11B 20/10

(54) **RECORDING MEDIUM AND PRODUCTION METHOD, PLAYBACK METHOD, AND PLAYBACK DEVICE THEREOF**

(30) Priority: 20.03.2003 JP 2003078376
(71) Applicant: SONY CORPORATION, Tokyo 141-0001 (JP); Sony Pictures Entertainment Inc., Culver City, CA 90232 (US)
(72) Inventor: KITANI, Satoshi;, Shinagawa-ku Tokyo;1410001 (JP); EKLUND, Charles, Don;, ton Blvd., Culver City, California;90232 (US); YONEMITSU, Jun;, Shinagawa-ku Tokyo;1410001 (JP); MURAMATSU, Katsumi;, Shinagawa-ku Tokyo;1410001 (JP)
(74) Representative: Müller, Frithjof E.
(86) International application number: PCT/JP2004/002630
(87) International publication number: WO 2004/084549

(57) **Abstract**

A list of video fingerprinting data that represents a feature of the newest video content is extracted from a digital video disc 160 or provided by a copyright supervisor authorized by a managing organization. The list of the video fingerprinting data is recorded in a non-volatile memory 181. When video content is reproduced from the digital video disc 160, a fingerprinting data calculating portion 187 extracts the feature of the video content and obtains video fingerprinting data. When the data is contained in the list, the reproduction for the video content is restricted. Thus, the reproduction for an illegal digital video disc 160 can be restricted until the copyright supervisor permits the reproduction for the digital video disc 160.

## Description

### Technical Field

The present invention relates to a recording medium, a producing method thereof, a reproducing method; and a reproducing apparatus for preventing an illegally copied content such as a movie from being used.

### Background Art

On one recording medium such as a DVD (Digital Versatile Disc), which has been recently developed, a large capacity of data for one movie can be recorded as digital information. When video information and so forth can be recorded as digital information, it will become important to protect copyright of digital information against illegal copies.

A DVD-Video disc uses as a copy protection technology the CSS (Content Scrambling System). According to the CSS contract, the CSS has been authorized for only DVD mediums, not recordable DVDs such as a DVD-R, a DVD-RW, DVD+R, DVD+RW, and so forth. Thus, according to the CSS contract, the CSS has not been authorized for the user to copy the contents of a DVD-Video disc to a recordable DVD (so-called bit-by-bit copy).

As a successor of the CSS, CPPM (Content Protection for Pre-Recorded Media) as a copyright protection technology for DVD-ROMs such as a DVD-Audio disc and CPRM (Content Protection for Recordable Media) as a copyright protection technology for recordable DVDs and memory cards have been proposed. In these systems, even if a problem about encryption for contents, storage of management information, and so forth takes place, the systems can be updated. Even if data of a whole disc is copied, the reproduction thereof can be restricted. A method for protecting copyright for DVDs is described in "Yamada, 'Spreading-out Copyright Protection Space Starting from DVD', Nikkei Electronics, 2001.8.13, pp. 143-153". The CRPM is described in "Content Protection for Recordable Media Specification DVD Book", Internet <URL: http://www.4Centrity.com/>" distributed by its licenser, 4C Entity, LLC, USA.

However; actually movie contents have been illegally copied. Since HD (High Definition) digital video cameras and HD digital video disc recording will be practically used in several years, if such a situation is left unsolved, benefit of copyright owners will be seriously lost. Next, examples of illegal copy deeds will be described.

### <1. Secretly photographed in movie theater>

New movies shown in movie theaters are photographed by digital video cameras. With sources of photographed movies, DVD-Video discs are produced as ROM discs. In addition, a movie film shown in a movie theater is converted into a base band video signal by a telecine operation. With a source of the video signal, illegal DVD-Video discs are produced as ROM discs.

### <2. Copied from legally distributed DVD-Video disc (Use of "DeCSS">

DeCSS software that can break encryption of CSS has been distributed on the Internet and anyone can easily obtain it. With the DeSS, the contents of a DVD-Video disc can be decrypted and written to a recordable DVD. When the contents are brought to a DVD production factory, DVD-Video discs of the contents can be produced.

### <3. Copied from legally distributed DVD-Video disc (Using analog output)>

Since a personal computer (hereinafter sometimes referred to as PC) is not a dedicated device, it does not need to conform to CGMS-A (Copy Generation Management System - Analog) and macro-vision signal. Thus, those copy restriction schemes do not effectively work for the PC. Thus, when an output of a DVD-Video player that is input to a video capture board disposed in the PC, the output of the DVD-Video player can be copied to a HDD (Hard Disc Drive). Video data that has been recorded to the HDD can be written as non-encrypted data to a recordable DVD. When the content is brought to a DVD production factory, DVD-Video discs can be produced as ROM discs.

### <4. Copied from legally distributed DVD-Video disc (Illegally produced at DVD production factory)>

At a DVD production factory, extra DVDs may be produced when ordered DVDs are produced. The extra DVDs would be sold in an illegal market.

### <5. Copied from legally distributed DVD-Video disc (copied to original)>

An original may be made from a legally distributed DVD-Video disc. With the original disc as a copy master, DVD-Video discs may be produced as ROM discs.

So far, technical proposals for solving problems of illegal copies have not been made with respect to conventional copyright protection technologies such as the foregoing CSS, CPPM, and CPRM.

Therefore, an object of the present invention is to provide a recording medium, a producing method thereof, a reproducing method, and a reproducing apparatus that allow a profit of a copyright owner to be protected against an illegal copy of a video content.

### Disclosure of the Invention

To solve the foregoing problem, claim 1 of the present invention is a recording medium on which data of a video content has been recorded, wherein a video fingerprinting data list has been recorded on the recording medium, the video fingerprinting data list being a list of entries of video fingerprinting data extracted from a plurality of video contents whose reproduction has not been permitted by a copyright supervisor.

Claim 3 of the present invention is a recording medium producing method for producing a recording medium on which data of a video content has been recorded, the method comprising the steps of: editing the data of the video content; and recording a video fingerprinting data list of entries of video fingerprinting data extracted from a plurality of video contents whose reproduction has not been permitted by a copyright supervisor.

Claim 5 of the present invention is a reproducing method for reproducing data of a video content from a recording medium, the reproducing method comprising the steps of: reading from the recording medium a video fingerprinting data list of entries of video fingerprinting data extracted from a plurality of video contents whose reproduction has not been permitted by a copyright supervisor; extracting video fingerprinting data from a video content that is reproduced in the same manner as video fingerprinting data that has been extracted from the recording medium; determining whether or not the video fingerprinting data that has been extracted from the video content is contained in a video fingerprinting data list stored in a memory or the video fingerprinting data list that has been read at the data list reading step; and restricting a reproducing operation for the recording medium when the determined result at the data list determining step represents that the extracted video fingerprinting data is contained.

Claim 9 of the present invention is a reproducing apparatus for reproducing data of a video content from a recording medium, the reproducing apparatus comprising: a data list reading portion for reading from the recording medium a video fingerprinting data list of entries of video fingerprinting data extracted from a plurality of video contents whose reproduction has not been permitted by a copyright supervisor; an extracting portion for extracting video fingerprinting data from a video content that is reproduced in the same manner as video fingerprinting data that has been extracted from the recording medium; a data list determining portion for determining whether or not the video fingerprinting data that has been extracted from the video content is contained in a video fingerprinting data list stored in a memory or the video fingerprinting data list that has been read at the data list reading step; and a controlling portion for restricting a reproducing operation for the recording medium when the determined result of the data list determining portion represents that the extracted video fingerprinting data is contained.

According to the present invention, a list of video fingerprinting data extracted from a plurality of video contents whose reproduction has not been permitted by a copyright supervisor is recorded on a recording medium. When a reproducing apparatus reproduces data from a recording medium, the reproducing apparatus extracts video fingerprinting data therefrom. When the extracted video fingerprinting data is contained in the list, the reproduction for the recording medium can be restricted. When the reproducing apparatus has a memory that stores video fingerprinting data, the reproducing apparatus can extract video fingerprinting data from a recording medium, determine whether or not the extracted video fingerprinting data is contained in the list of the video fingerprinting data stored in the memory, and restrict the reproduction for the recording medium when the extracted video fingerprinting data is contained in the list.

### Brief Description of Drawings

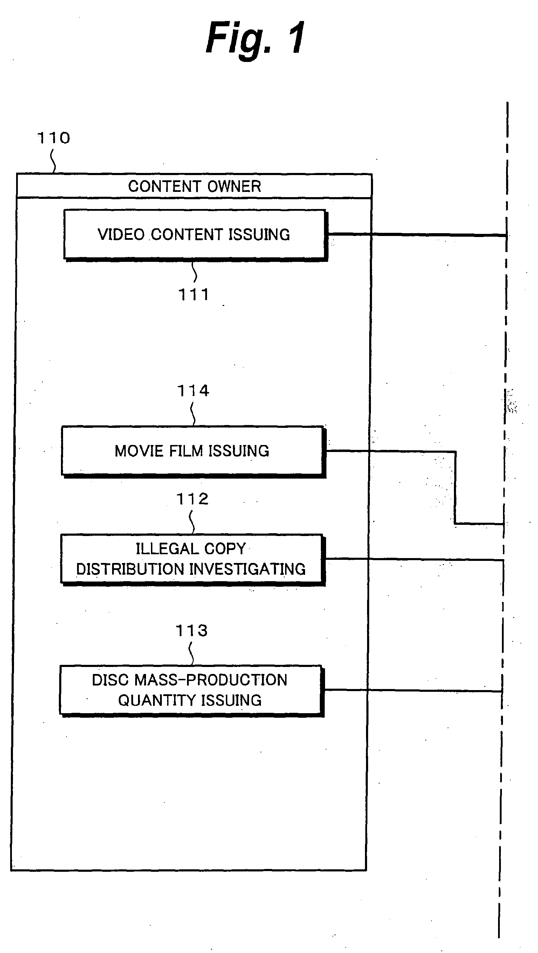

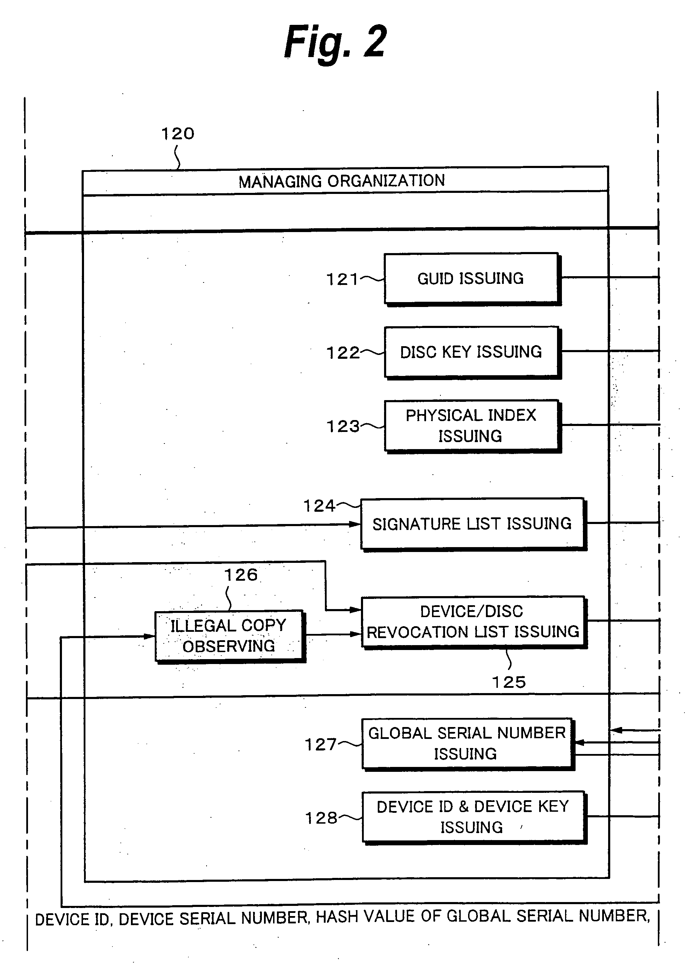

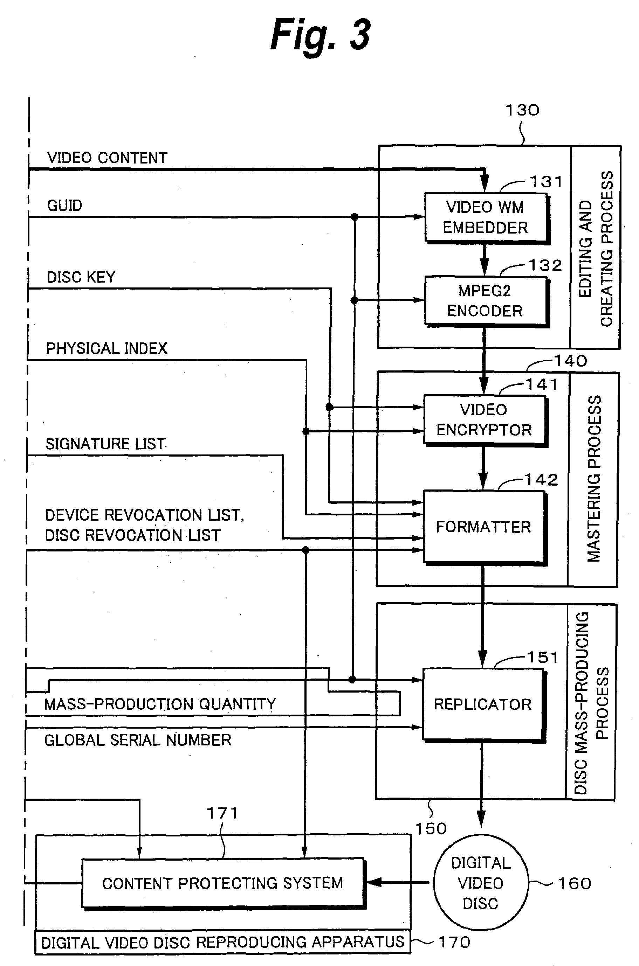

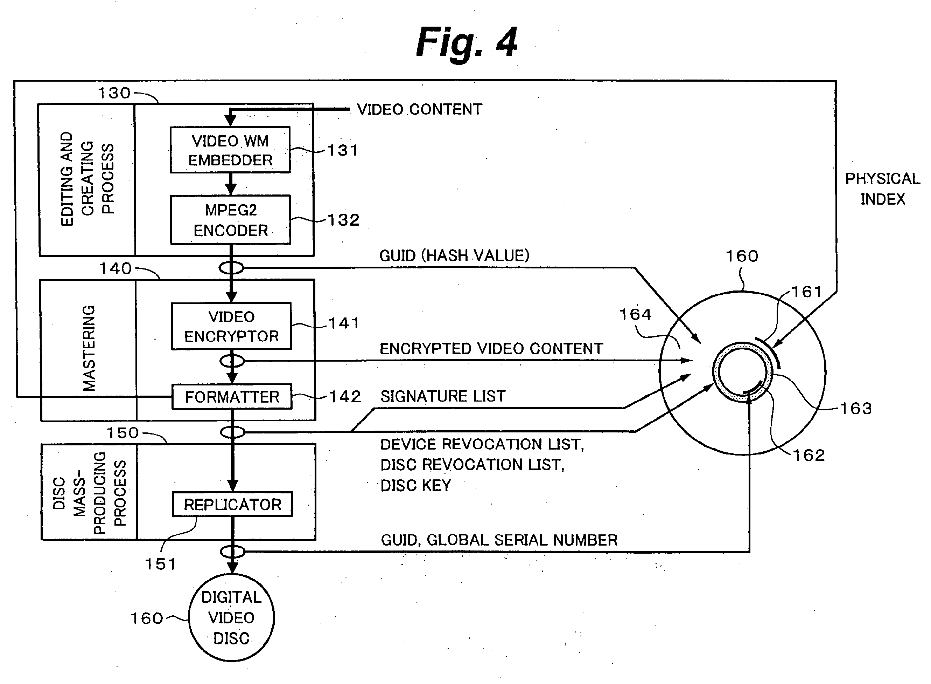

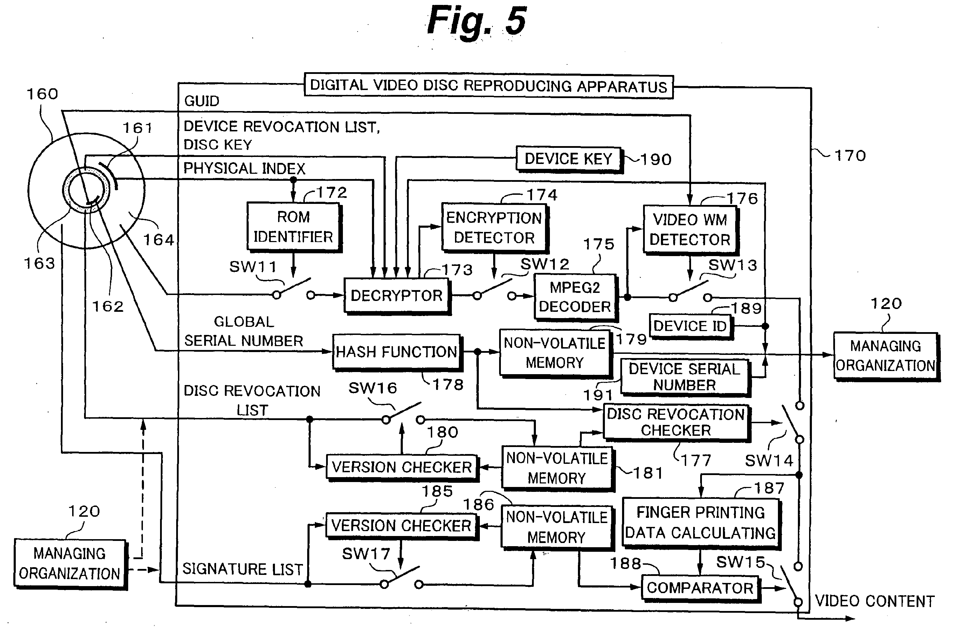

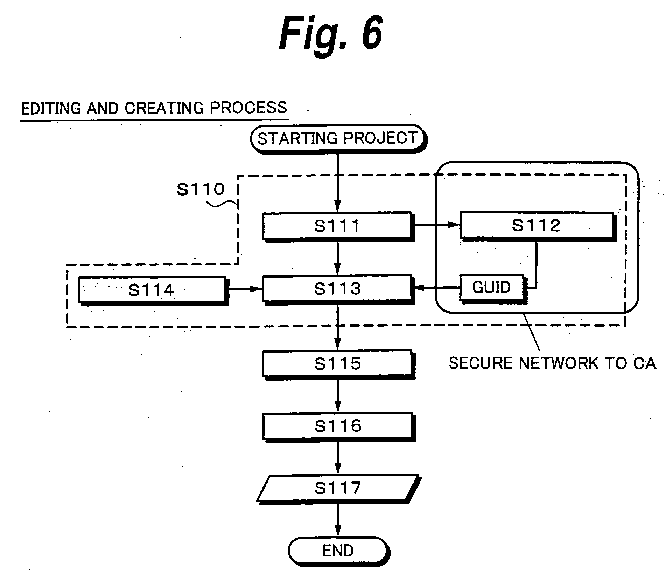

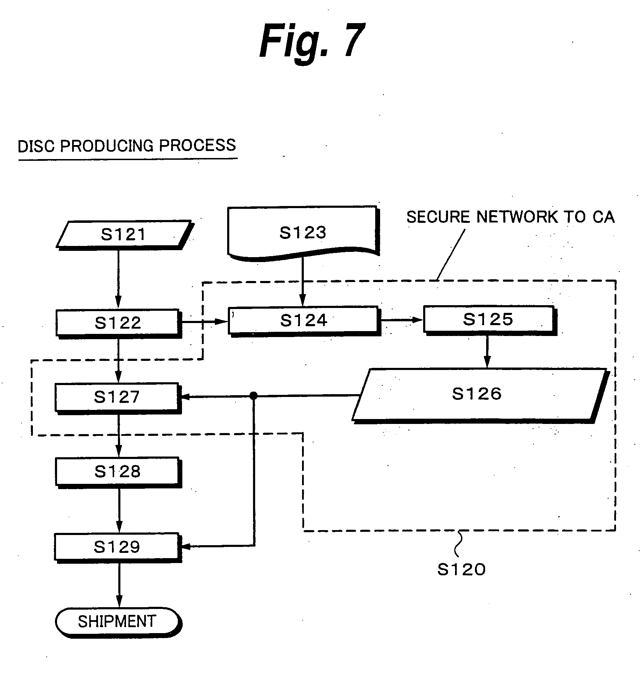

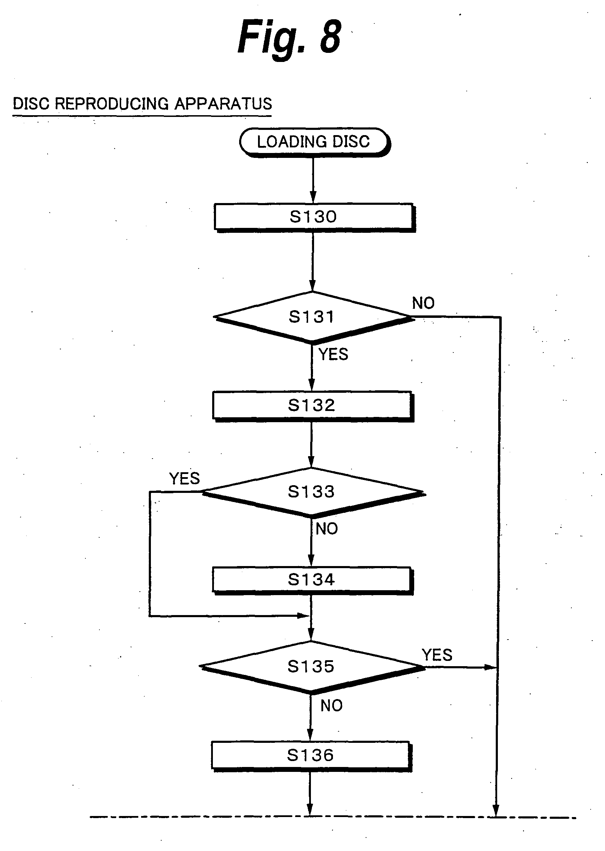

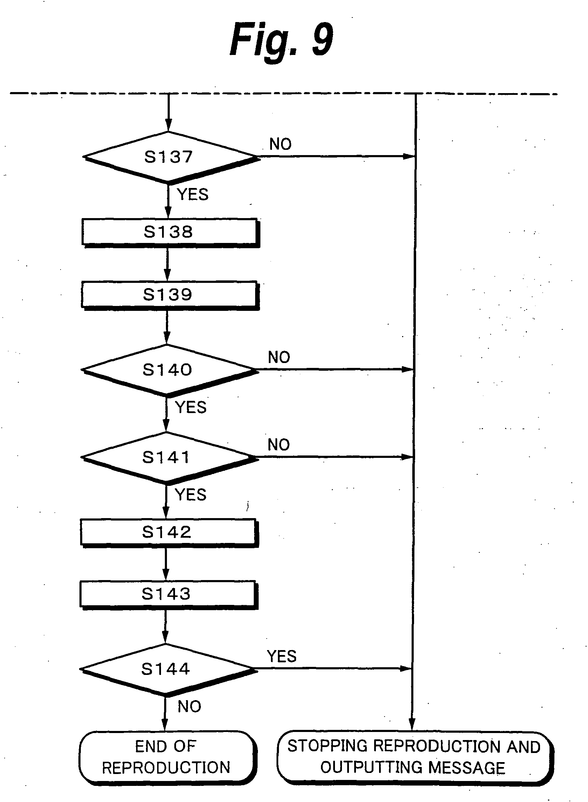

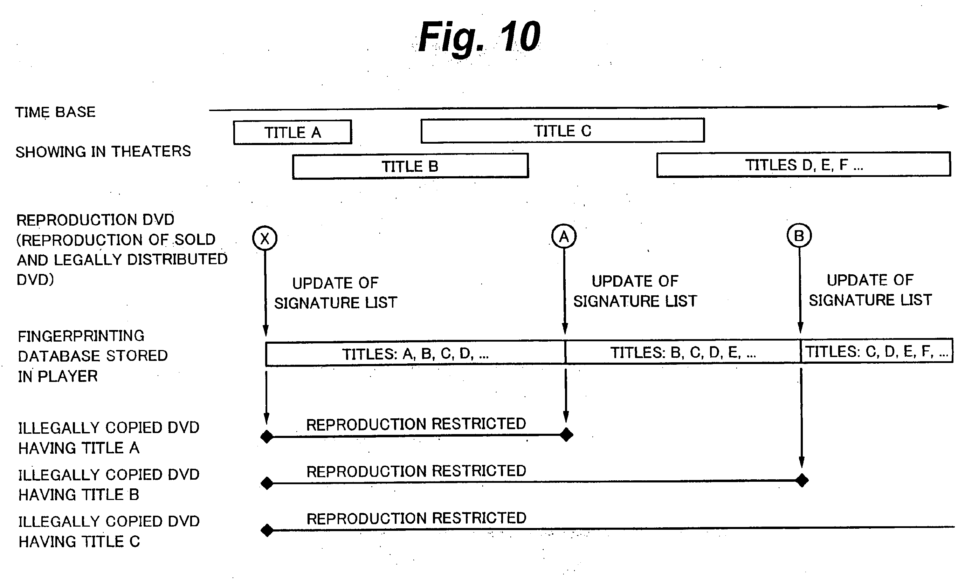

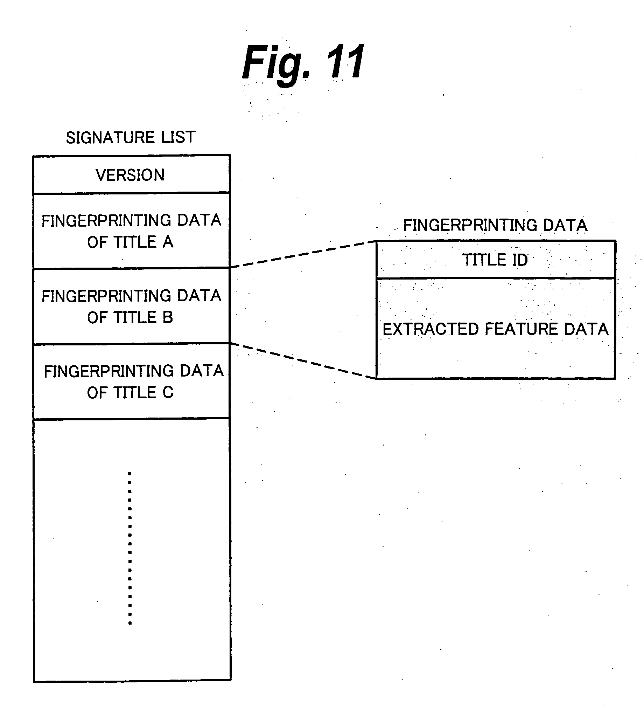

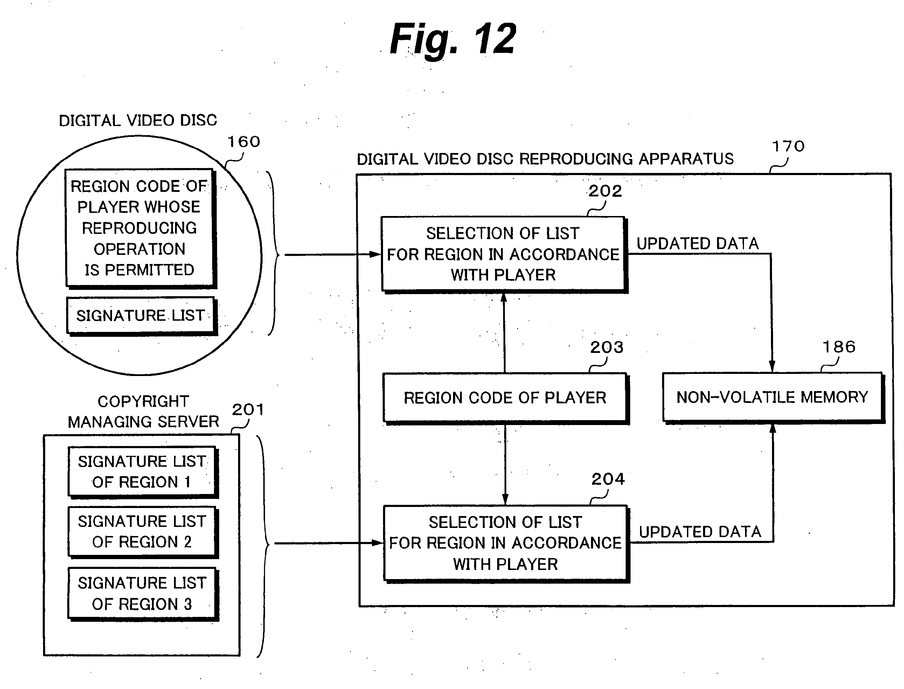

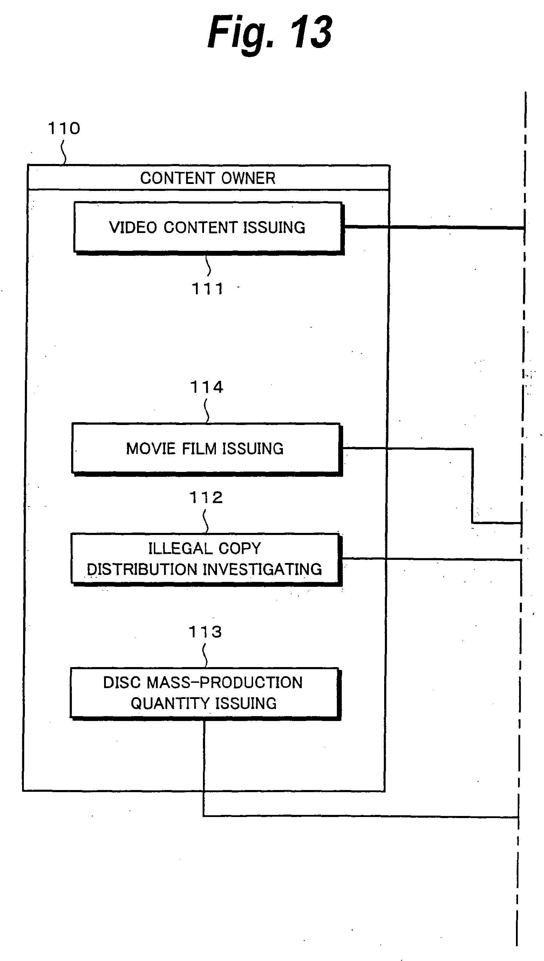

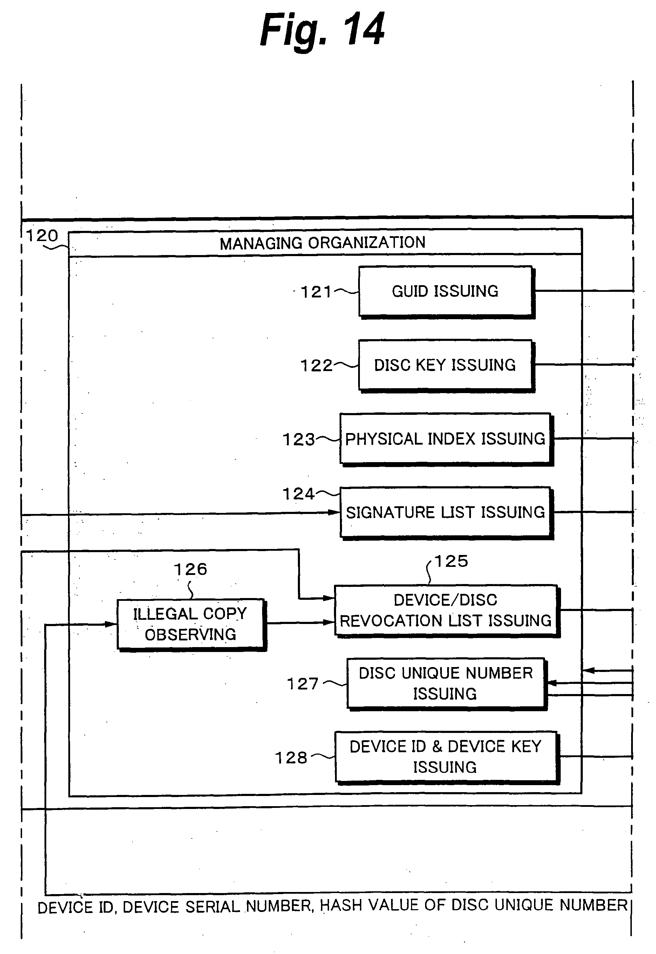

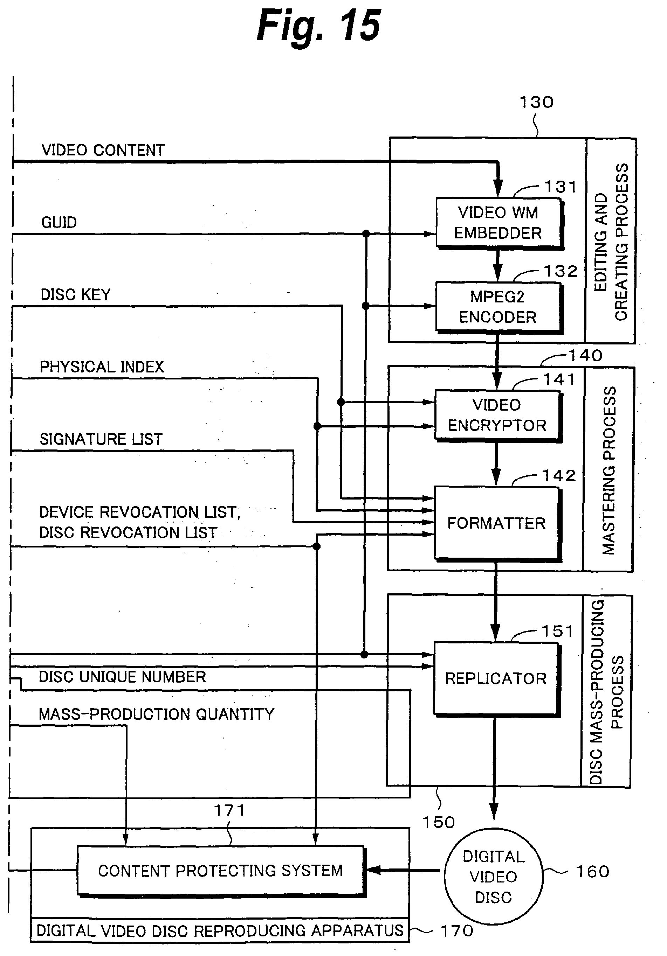

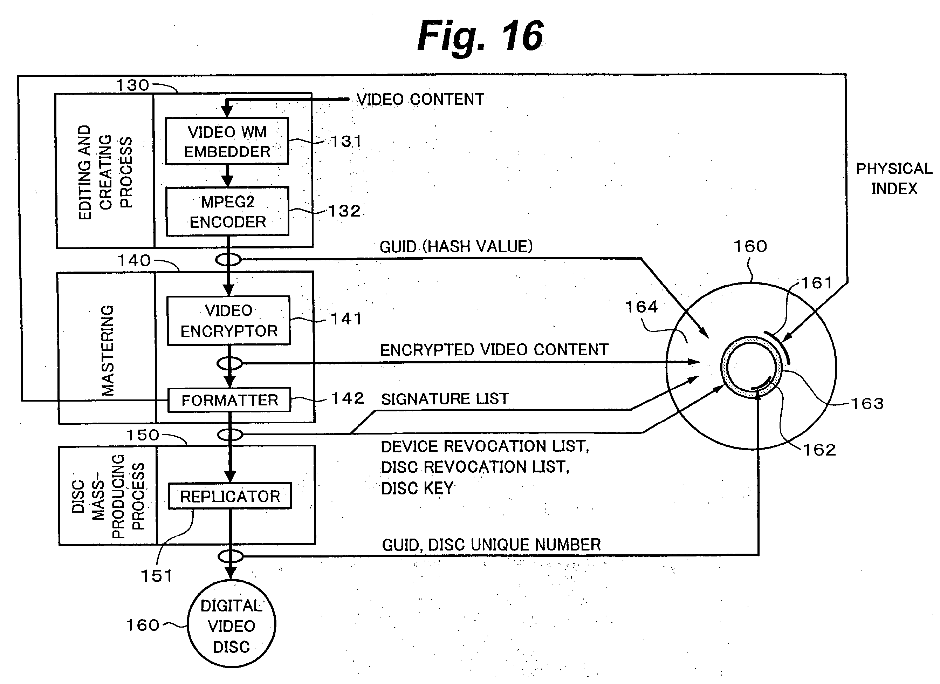

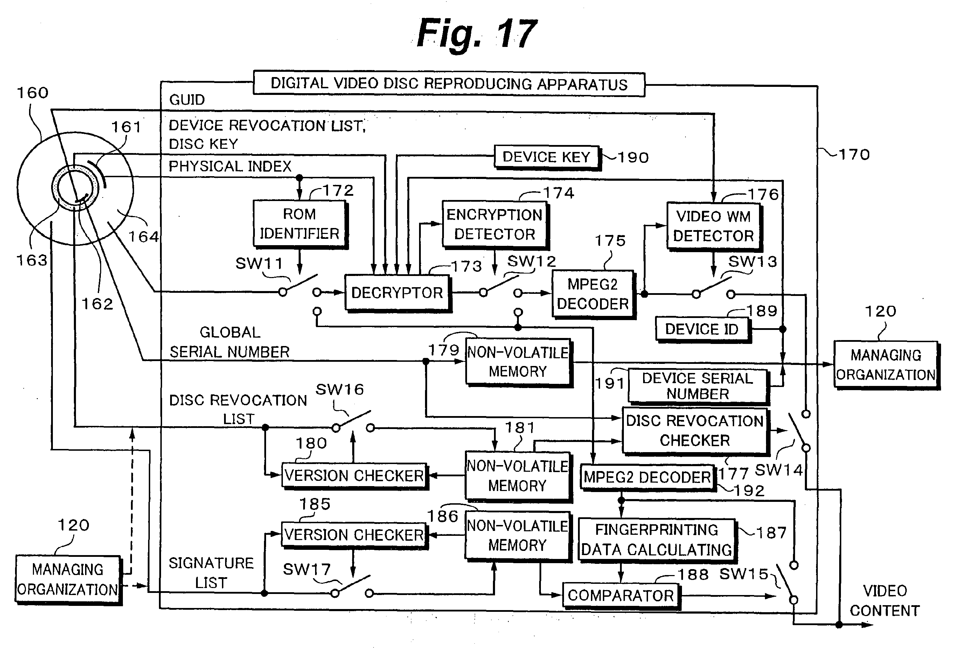

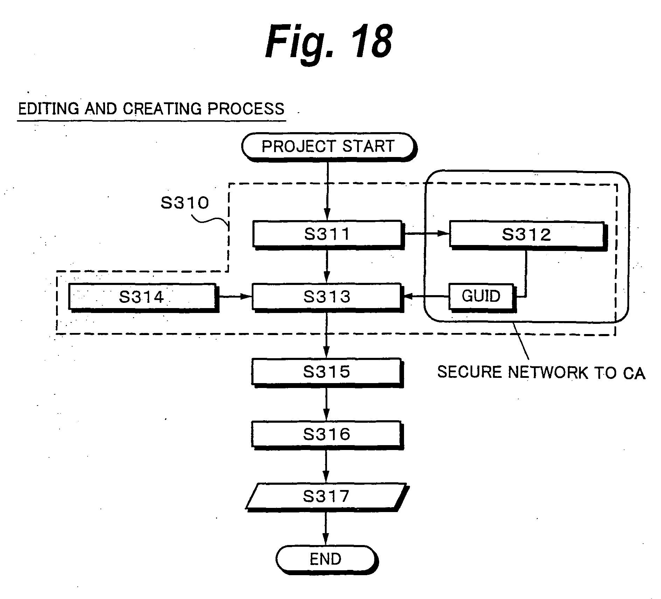

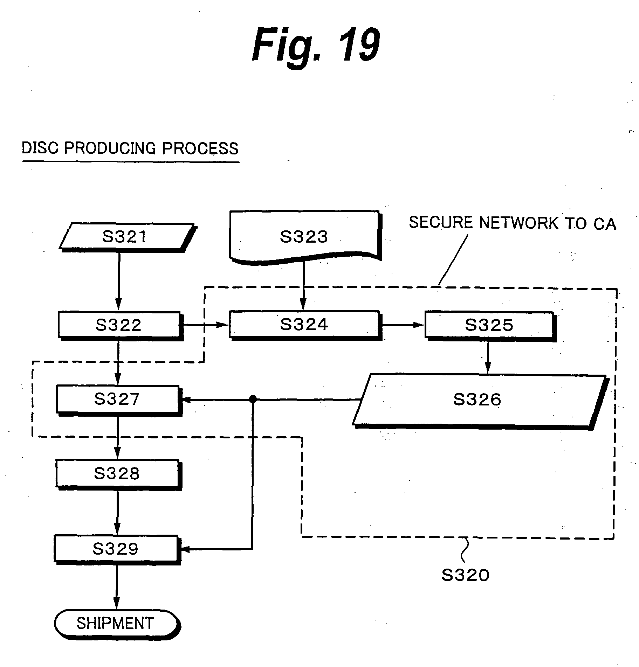

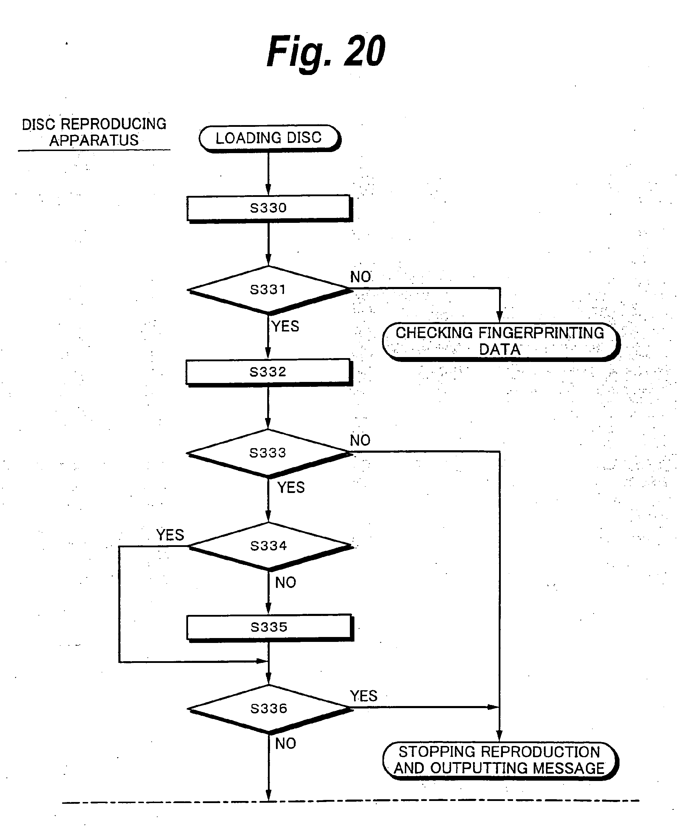

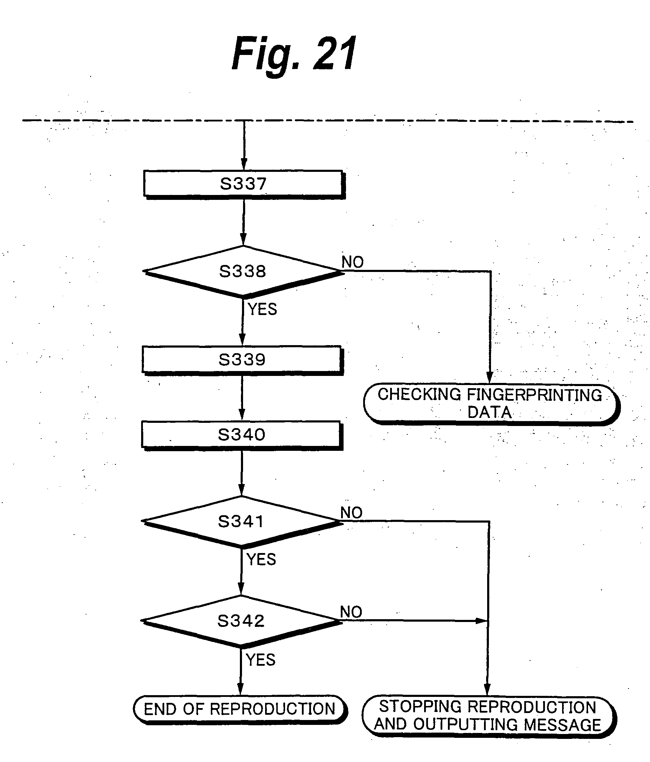

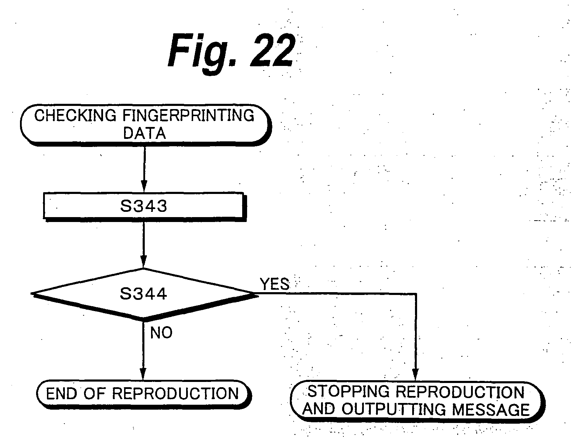

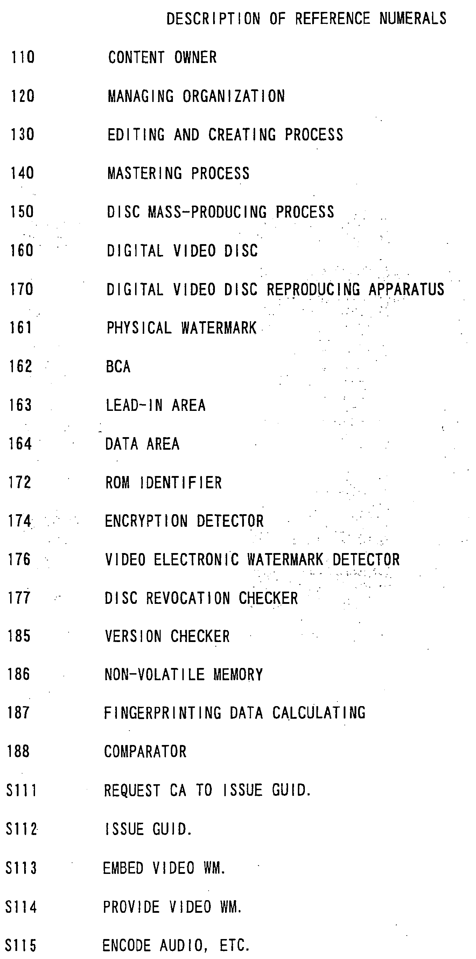

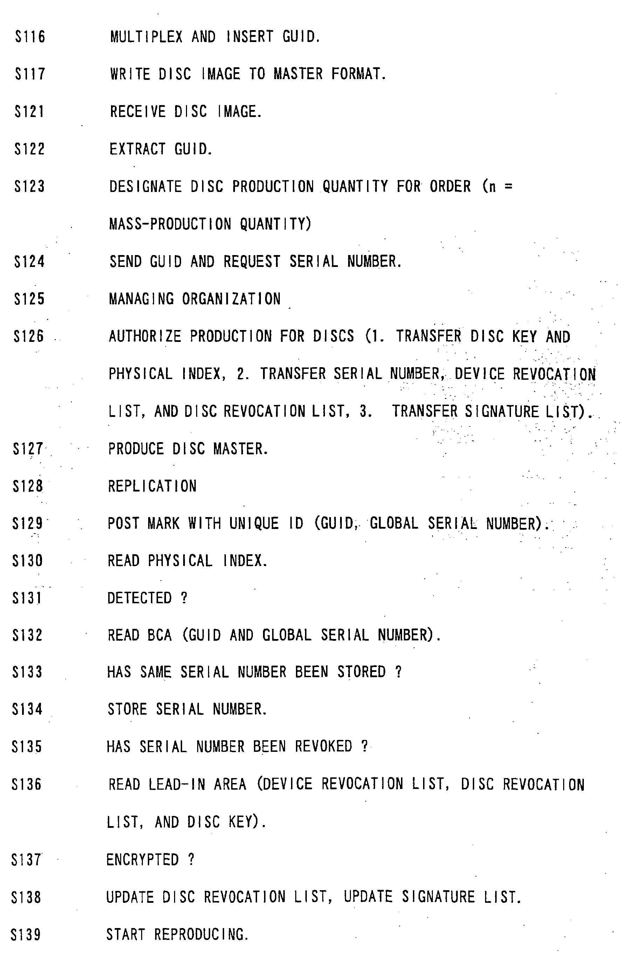

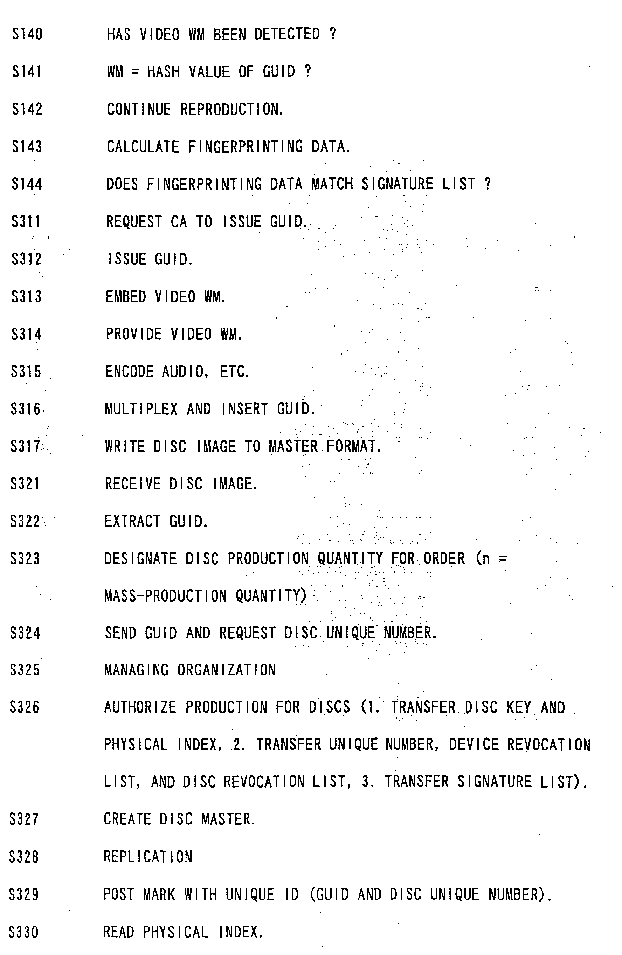

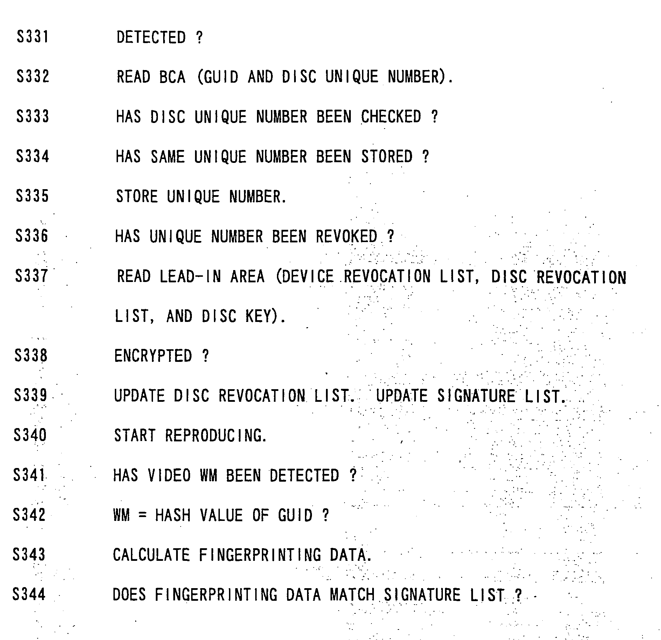

Fig. 1 is a schematic diagram showing an example of the overall system structure (left portion) composed of a creating process, a producing process, and a reproducing apparatus for a digital video disc according to a first embodiment of the present invention. Fig. 2 is a schematic diagram showing the example of the overall system structure (middle portion) composed of the creating process, the producing process, and the reproducing apparatus for the digital video disc according to the first embodiment of the present invention. Fig. 3 is a schematic diagram showing the example of the overall system structure (right portion) composed of the creating process, the producing process, and the reproducing apparatus for the digital video disc according to the first embodiment of the present invention. Fig. 4 is a schematic diagram showing an example of the structure of a data recording area of the digital video disc according to the first embodiment of the present invention. Fig. 5 is a schematic diagram showing an example of the structure of the digital video disc reproducing apparatus that reproduces data from the digital video disc according to the first embodiment of the present invention. Fig. 6 is a schematic diagram showing a flow of an editing and creating process for the digital video disc according to the first embodiment of the present invention. Fig. 7 is a schematic diagram showing a flow of a producing process for the digital video disc according to the first embodiment of the present invention. Fig. 8 is a schematic diagram showing a flow (first half portion) of a process of the digital video disc reproducing apparatus according to the first embodiment of the present invention. Fig. 9 is a schematic diagram showing a flow (second half portion) of the process of the digital video disc reproducing apparatus according to the first embodiment of the present invention. Fig. 10 is a schematic diagram showing an example of the relation of showing periods of movies, reproduction periods for legally distributed digital video discs, and reproduction restriction periods for illegally copied DVDs according to the first embodiment of the present invention. Fig. 11 is a schematic diagram showing an example of the structure of a signature list according to the first embodiment of the present invention. Fig. 12 is a schematic diagram showing an example of a process for changing reproduction restricted titles in accordance with regions according to the first embodiment of the present invention. Fig. 13 is a schematic diagram showing an example of the overall system structure (left portion) composed of a creating process, a producing process, and a reproducing apparatus for a digital video disc according to a second embodiment of the present invention. Fig. 14 is a schematic diagram showing the example of the overall system structure (middle portion) composed of the creating process, the producing process, and the reproducing apparatus for the digital video disc according to the second embodiment of the present invention. Fig. 15 is a schematic diagram showing the overall system structure (right portion) composed of the creating process, the producing process, and the reproducing apparatus for the digital video disc according to the second embodiment of the present invention. Fig. 16 is a schematic diagram showing an example of the structure of a data recording area of the digital video disc according to the second embodiment of the present invention. Fig. 17 is a schematic diagram showing an example of the structure of the digital video disc reproducing apparatus that reproduce data from the digital video disc according to the second embodiment of the present invention. Fig. 18 is a schematic diagram showing a flow of an editing and creating process for the digital video disc according to the second embodiment of the present invention. Fig. 19 is a schematic diagram showing a flow of a producing process for the digital video disc according to the second embodiment of the present invention. Fig. 20 is a schematic diagram showing a flow (first half portion) of a process of the digital video disc reproducing apparatus according to the second embodiment of the present invention. Fig. 21 is a schematic diagram showing the flow (second half portion) of the process of the digital video disc reproducing apparatus according to the second embodiment of the present invention. Fig. 22 is a schematic diagram showing a flow of a film electronic watermark checking process according to the second embodiment of the present invention.

### Best Modes for Carrying out the Invention

First of all, with reference to the accompanying drawings, a first embodiment of the present invention will be described. Fig. 1 to Fig. 3 show an example of the overall system structure composed of a creating process, a producing process, and a reproducing apparatus for a digital video disc. Due to a limited drawing space, the overall system is divided into three portions shown in Fig. 1 to Fig. 3.

A content owner 110 has a copyright of a video content. The content owner 110 is a person or an organization who intends to make a mass-production order for digital video discs so as to get profits from their sales.

A managing organization 120 is a managing organization that manages copyright protection technologies. When the managing organization 120 is requested from the content owner 110, the managing organization 120 provides copyright protection technologies and information thereof to the editing and creating process, the producing process, and the reproducing apparatus that have formally contracted with the managing organization 120, properly manages the technologies and information thereof, and has a function for preventing contents of digital video discs from being illegally copied.

An editing and creating process 130 is an editing and creating process that edits and creates a video content that the content owner 110 has requested. The editing and creating process 130 is disposed in a studio or the like that edits digital video discs. A mastering process 140 is a process that produces an original from which digital video discs are mass-copied. The mastering process 140 is disposed in a disc production factory or the like. A disc mass-producing process 150 is a process that mass-produces digital video discs. The disc mass-producing process 150 is disposed in the disc production factory or the like.

A digital video disc 160 is a mass-produced read-only digital video disc medium. Video and audio signals are mainly recorded on the digital video disc 160. A digital video disc reproducing apparatus 170 is a reproducing apparatus for the digital video disc 160.

A video content issuing portion 111 issues a video content that is recorded on the digital video disc 160. In Fig. 1 to Fig. 3, a video content is sent through the managing organization 120. Alternatively, a video content may be directly sent from the content owner 110 to the editing and creating process 130. An illegal copy distribution investigating portion 112 is an organization that investigates illegally distributed copies. In this example, the illegal copy distribution investigating portion 112 investigates copied mediums that have been illegally created, produced, and distributed in the market. Currently, a contracted investigation company performs the market investigation. A disc mass-production quantity issuing portion 113 designates the mass-production quantity of the digital video discs 160 that has a title that the content owner 110 orders. In Fig. 1 to Fig. 3, the disc mass-production quantity is designated through the managing organization 120. Alternatively, the disc mass-production quantity may be directly designated from the content owner 110 to the editing and creating process 130.

A movie film issuing portion 114 is a portion that issues a new movie film. Although a new movie shown in a movie theater is regularly distributed as a film, compressed video data is distributed to a digital cinema. To prevent a movie shown in a movie theater from being photographed by a camera or the like or a video signal that is tele-cine converted from being illegally mass-produced as video discs 160, a signature list is calculated with a film content to be protected using a fingerprinting technology or the like. The obtained signature list is pre-recorded in the reproducing apparatus. As a result, the reproducing apparatus can identify an illegally distributed content.

A fingerprinting technology serves to extract a feature from a content and use the extracted feature as fingerprinting data. With the fingerprinting data, the content can be identified. The fingerprinting technology can be used for searching a content. As an example of fingerprinting of a video content, a graph (horizontal axis represents frame number, vertical axis represents feature data) of which average values of all luminance information of all still pictures of a moving picture (feature data of still pictures) are plotted on a time base can be used. Besides luminance information of all still pictures, three graphs using all average values of components of Y, Cb, and Cr information and R, G, and B information may be used as fingerprinting.

A GUID issuing portion 121 issues a global unique ID (GUID) that is distributed for each title. A GUID is used as title information that represents the title of a video content. For example, a GUID is provided by a copyright managing server authorized by the managing organization 120 through a network. A disc key issuing portion 122 issues a disc key that is a piece of key information necessary for obtaining a content key and that is pre-recorded on the digital video disc 160.

A physical index issuing portion 123 issues a physical index that is pre-recorded on the digital video disc 160 so as to identify a disc medium as a reproduction-only medium. According to the first embodiment, a physical index is also used as key information with which a content key is obtained. A physical index is recorded on only a reproduction-only medium. A physical index is recorded on other than a channel for a regular data area in such a manner that the physical index cannot be copied. When a physical index is recorded on the digital video disc 160, it can be determined as a disc medium that has been produced through a legal process.

A signature list issuing portion 124 calculates feature data that identifies a video content, which has been illegally created and produced, using for example a fingerprinting technology. The signature list issuing portion 124 makes up a list of for example 100 titles, adds a list version thereto, and issues the list.

A device/disc revocation list issuing portion 125 issues data that identifies a reproducing apparatus for a video content that has been illegally created and produced or a video content itself. An illegal copy observing portion 126 is an observing organization that detects a copied medium that has been illegally created, produced, and distributed in the market in accordance with data collected from the video content reproducing apparatus.

A global serial number issuing portion 127 issues global serial numbers that are recorded on mass-produced discs in accordance with the disc mass-production quantity issued by the disc mass-production quantity issuing portion 113. The global serial numbers are serial numbers of all titles. Thus, the global serial numbers are uniquely assigned to individual discs. The global serial numbers are used as disc identification numbers that uniquely identify individual discs.

A device ID & device key issuing portion 128 issues a device ID and a device key stored in a non-volatile memory of the digital video disc reproducing apparatus 170. A device ID is used to identify the reproducing apparatus 170 in accordance with a device revocation list pre-recorded on the digital video disc 160. In addition, a device ID is used to obtain a reading method for a device key and a disc key pre-recorded on the digital video disc 160 from the device revocation list pre-recorded on the digital video disc 160.

A video WM embedder 131 is a device that embeds electronic watermark information in a video content. An electronic watermark is a technology for embedding additional information such as content copy generation management information and copyright owner's information in a digital content such as a still picture or a moving picture. An electronic watermark is embedded in a digital content in accordance with for example a spectrum spreading system. An electronic watermark according to the present invention cannot be almost seen. In addition, when an electronic watermark is embedded in a digital content, the electronic watermark does not deteriorate the digital content. In the drawings, an electronic watermark is abbreviated as WM.

The video WM embedder 131 calculates a hash value of a GUID and embeds the hash value as electronic watermark information in a video signal. To cause a value embedded as a video electronic watermark in a video signal and a value recorded to a BCA 162 (that will be described later) to become not correlative, a hash value is used. A hash value is a value obtained using a one-directional function such as a hash function (that is a function of which it is difficult to calculate and obtain two different inputs that become the same output value). A hash value of a GUID is used as a title message necessary for assuring the trueness of the GUID.

An MPEG2 encoder 132 is a video compression encoder. In this example, the MPEG (Moving Picture Experts Group) 2 system is used. However, another compressing system other than the MPEG2 system may be used. The MPEG2 encoder 132 includes an operation for forming a file that can be managed by a file system. A GUID is recorded in a volume descriptor.

A video encryptor 141 is a process that encrypts a video content with a disc key and a content key obtained from a physical index. A formatter 142 is a process that produces an original from which the digital video discs 160 are mass-produced with an encrypted video content, a disc key used to encrypt the video content, a physical index, a signature list that identifies an illegally distributed video content, a disc revocation list that identifies an illegally copied disc, and a device revocation list that identifies a reproducing apparatus that has been illegally produced or modified. A replicater 151 is a producing process that mass-produces digital video discs 160 from an original.

A content protecting system 171 is a mechanism that controls a copyright protecting technology. The content protecting system 171 has a mechanism that stores a device ID, a device key, a disc revocation list, and a global serial number of the digital video disc 160 from which a content is reproduced, and a scheme that reports the global serial number of the medium from which the content is reproduced and a device ID of the digital video disc reproducing apparatus 170 to the managing organization 120 in a predetermined condition. In addition, the content protecting system 171 has a mechanism that references a device revocation list, a disc revocation list, and a signature list, detects an illegally reproducing state in accordance therewith, and restricts the reproducing operation.

Fig. 4 shows an example of the structure of a data recording area of the digital video disc 160. A physical index recording area 161 is an area for recording a physical index. A physical index is multiplex-recorded in such a manner that it does not affect main data that is read.

For example, the widths of pits and marks as main data are partly varied with a modulation signal. The varied portion can be multiplexed as sub data with the main data. A method of which pits, marks, and so forth as main data are formed at positions deviated from the center positions of tracks and the deviated positions are multiplexed as sub data with the main data has been proposed. The sub data of the recording method, namely the widths and deviations of pits, marks, and so forth as the main data, can be read by an optical pickup of the reproducing apparatus. In addition, the sub data does not affect the main data that is output from a binary circuit and so forth. The multiplex-recorded identification information can be used to prevent data from being illegally copied.

In those recording methods, even if main data is read from all the disc area and copied, since the physical index of the multiplexed portion is not copied, this recording method is effective for a whole copying operation (bit-by-bit copying operation).

A burst cutting area (hereinafter sometimes referred to as BCA) 162 is an area for recording a GUID that identifies a title and a global serial number that is unique to each disc. After data is recorded on a disc medium, the BCA is recorded on the disc medium. When the disc medium is a disc-shaped optical recording medium, pulse laser light modulated according to the record information is radiated on a reflection film made of aluminum or the like formed inside the disc. As a result, a stripe (bar code) is formed in the radius direction. The stripe is formed on the innermost periphery in accordance with the record information. The BCA is read by the optical pickup of the reproducing apparatus so as to obtain data from the BCA. Even if the data area of a disc is copied to another recording medium using a computer or the like, data recorded in the BCA is not copied. When ID data of a recording medium and key data for encrypted content recorded in the data area are recorded in the BCA, a content can be prevented from being reproduced from an illegally copied recording medium.

The device revocation list, the disc revocation list, and the disc key are recorded in other than an area for a video content for example a lead-in area 163 in such a manner that they cannot be rewritten.

A data area 164 is a data area for recording an encrypted video content in which a hash value of a GUID has been embedded as electronic watermark information and a signature list that identifies an illegally copied video content.

Fig. 5 shows an example of the structure of the digital video disc reproducing apparatus 170 that reproduces data from the digital video disc 160. A ROM identifier 172 determines whether or not a disc loaded into the digital video disc reproducing apparatus 170 is a read-only digital video disc 160. When the determined result represents that the loaded disc is a digital video disc 160, a switch SW11 is turned on. Otherwise, the switch SW11 is turned off.

A decryptor 173 decrypts an encrypted video content. An encryption detector 174 determines whether or not the digital video disc reproducing apparatus 170 has been revoked and whether or not a video content recorded on the digital video disc 160 has been encrypted. When the determined results represent that the reproducing apparatus has not been revoked and that the video content has been encrypted, a switch SW12 is turned on. Otherwise, the switch SW12 is turned off.

An MPEG2 decoder 175 decompresses a compressed video signal and obtains a base band video signal. A video WM detector 176 detects video electronic watermark information from the video content. After the electronic watermark information has been detected, the video WM detector 176 calculates a hash value of the GUID recorded in the BCA 162 and compares the hash value and the electronic watermark information. When they do not match, a switch SW13 is turned off. When they match or when the electronic watermark information has not been detected, the switch SW13 is turned on.

A disc revocation checker 177 compares a hash value of a global serial number recorded in the BCA 162 and a value registered in a disc revocation list stored in the non-volatile memory of the reproducing apparatus and determines whether or not the hash value has been registered in the disc revocation list. When they match, the disc revocation checker 177 determines that the digital video disc 160 should be revoked. At that point, a switch SW14 is turned off. When they do not match, the switch SW14 is turned on. Alternatively, the disc revocation checker 177 may compare not only the hash value of the global serial number but other information such as the GUID with the disc revocation list. As a result, the probability of which a disc is uniquely identified becomes high. Thus, the risk of which a legally distributed disc is mistakenly revoked becomes low.

A hash function 178 is a hash function with which a hash value of a global serial number is calculated. The hash function 178 is the same as the function with which a hash value of a global serial number of a disc to be revoked is registered. A hash value of a global serial number is used as an identification message necessary for assuring the trueness thereof. When data is transferred from the digital video disc reproducing apparatus 170 to the managing organization 120, a hash value of a global serial number is used. Thus, since a title that the user has watched cannot be identified, the privacy of the user can be protected.

A non-volatile memory 179 is a non-volatile memory that stores a hash value of a global serial number as a record of a medium from which the reproducing apparatus has reproduced data. When the managing organization 120 is connected to the digital video disc reproducing apparatus 170 through a network, the record data for the reproduction medium stored in the non-volatile memory 179 is transferred to the managing organization 120 along with a device ID 189 and a device serial number 191. After the record data has been transferred to the managing organization 120, the record data is erased from the non-volatile memory 179 so as to secure a blank space. When the managing organization 120 and the digital video disc reproducing apparatus 170 are connected through a network, it is assumed that an encryption communication such as SSL (Secure Socket Layer) authentication or VPN (Virtual Private Network) based on IPsec (IP security protocol) encryption is performed.

When the disc revocation list recorded on the digital video disc 160 is stored in a non-volatile memory 181, a version checker 180 compares the version of the disc revocation list that has been stored and the version of the disc revocation list recorded on the digital video disc 160. When the version of the data recorded on the digital video disc 160 is newer than the version of the data that has been stored, a switch SW16 is turned on so as to update data of the disc revocation list stored in the non-volatile memory 181.

A non-volatile memory 181 is a non-volatile memory that stores a disc revocation list. The disc revocation list may be transferred from the managing organization 120 when it is connected to the digital video disc reproducing apparatus 170 through a network. At that point, in the same process as the disc revocation list that is updated with the medium, data stored in the non-volatile memory 181 is updated.

When the signature list recorded on the digital video disc 160 is stored in a non-volatile memory 186, a version checker 185 compares the version of the signature list that has been stored and the version of the signature list recorded on the digital video disc 160. When the version of the data recorded on the digital video disc 160 is newer than the version of the data that has been stored, a switch SW17 is turned on so as to update data stored in the non-volatile memory 186.

The non-volatile memory 186 is a non-volatile memory that stores a signature list of a plurality of titles for example 100 titles. The 100 titles are for example new movies that are currently shown in movie theaters, neither having been mass-produced, nor having been sold as digital video discs 160. When the reproducing apparatus reproduces a movie content listed in the signature list, it is assumed that the movie content has been illegally distributed.

A signature list may be transferred from the managing organization 120 when it is connected to the digital video disc reproducing apparatus 170 through a network. In this case, in the same process as the signature list that is updated with the medium, data stored in the non-volatile memory 186 is updated.

A fingerprinting data calculating portion 187 is a process that calculates fingerprinting data with a video content that is being reproduced.

A comparator 188 is a process that compares the signature list calculated by the fingerprinting data calculating portion 187 with a signature list that is stored in the non-volatile memory 186 and that identifies a content that has been illegally distributed. When the fingerprinting data calculating portion 187 has not finished the calculation, a switch SW15 is turned on. When the fingerprinting data calculating portion 187 has finished the calculation and the value has been registered in the signature list stored in the non-volatile memory 186, it is assumed that the reproduced content is an illegally distributed content. In this case, the switch SW15 is turned off so as to stop the reproducing operation for the content. Alternatively, a message that represents that an illegally distributed content is being reproduced is superimposed on the reproduction screen so as to inform the user thereof.

The device ID 189 is identification data for the digital video disc reproducing apparatus 170. The device ID 189 is unique to each manufacturer of the reproducing apparatus or each model thereof.

A device key 190 is combined with data calculated from the device ID 189 and the disc revocation list so as to decrypt an encrypted secret disc key recorded on the digital video disc 160 and obtain the decrypted secret key.

A device serial number 191 is a production serial number that identifies the digital video disc reproducing apparatus 170 and that is designated by the manufacturer thereof.

The switch SW11 is a switch that controls the reproduction for a video content in accordance with the determined result of the ROM identifier 172. The switch SW12 is a switch that controls the reproduction for a video content in accordance with the determined result of the encryption detector 174. The switch SW13 is a switch that controls the reproduction for a video content in accordance with the determined result of the video WM detector 76. The switch SW14 is a switch that controls the reproduction for a video content in accordance with the determined result of the disc revocation checker 177. The switch SW15 is a switch that controls the reproduction for a video content in accordance with the determined result of the comparator 188. The switch SW16 is a switch that controls the storage of the disc revocation list in accordance with the determined result of the version checker 180. The switch SW17 is a switch that controls the storage of the signature list in accordance with the determined result of the version checker 185.

### <1. Description of editing and creating process>

Fig. 6 shows a flow of an editing and creating process for the digital video disc 160. Next, with reference to the block diagrams showing the overall system structure of Fig. 1 to Fig. 3, the editing and creating process for the digital video disc 160 shown in Fig. 6 will be described.

When a video content with which a digital video disc is created is received from the content owner 110, an editing and creating project takes place. When the editing and creating project for creating the digital video disc takes place, the editing and creating process 130 requests the managing organization 120 to issue a GUID (at step S111). In Fig. 6, CA represents the managing organization 120.

When the managing organization 120 has been requested to issue a GUID, the managing organization 120 issues a GUID for each title (at step S112). When the editing and creating process 130 has received a GUID, at step S14, the editing and creating process 130 embeds a hash value of the GUID in the video content (at step S113).

When the video WM embedder 131 that has received the GUID under contract with the managing organization 120 calculates a hash value of the GUID, the WM embedder 131 embeds the hash value as electronic watermark information in a video signal of the video content (at step S114).

At step S110, namely in step S111 to step S114, it is assumed that the editing and creating process 130 and the managing organization 120 structure VPN using for example SSL or IPsec technology so that data can be transmitted and received through a secure network connection.

Along with the video signal in which the hash value has been embedded as electronic watermark information, an audio signal of the video content, a sub title such as superimposed text, a menu for video contents, and data and a program necessary for accomplishing an interactive function are encoded (at step S115).

Data of each file are multiplexed. The GUID is recorded in a volume descriptor that is file system management information (at step S116). To perform the disc producing process, an HD-DVD disc image is written to a master format (at step S117).

### <2. Description of disc producing process>

Fig. 7 shows a flow of a producing process for the digital video disc 160. Next, with reference to the block diagrams showing the overall system structure of Fig. 1 to Fig. 3 and the schematic diagram showing the relation of the disc medium of Fig. 4, the flow of the producing process for the digital video disc 160 shown in Fig. 7 will be described.

An HD-DVD disc image is received from the editing and creating process 130 (at step S121). The GUID is read from the volume descriptor. The obtained GUID is transferred from the disc production factory to the managing organization 120 (at step S122).

When the content owner 110 has provided the video content to be edited and created to the editing and creating process 130, the content owner 110 has also designated the disc mass-production quantity for an order to the disc production factory (at step S123).

When the disc production factory has received the order for the disc mass-production from the content owner 110, the disc production factory transfers the GUID and the ordered disc quantity to the managing organization 120. The disc production factory requests the managing organization 120 to issue global serial numbers for the discs to be produced (at step S124).

The managing organization 120 identifies the title of the video content in accordance with the GUID received from the disc production factory. In addition, the managing organization 120 accurately calculates unused global serial numbers for the disc mediums to be produced in accordance with the received ordered disc quantity (at step S125).

The managing organization 120 authorizes the disc production factory to produce discs, namely transfers a disc key necessary for encrypting the HD-DVD disc image, a set of global serial numbers, a device revocation list, a disc revocation list, and a signature list to the disc production factory (at step S126). The device revocation list is data with which the reproducing operation of an illegally produced disc reproducing apparatus is restricted for data of a legally distributed disc medium. On the other hand, the disc revocation list is data with which the reproducing operation of a legally produced disc reproducing apparatus is restricted for data of an illegally produced disc medium.

The signature list is a database that has a plurality of entries of video fingerprinting data that identify movies that are currently shown and will be shown in movie theaters so as to prevent the content owner 110 from loosing sales profits from movie theaters for new movies and sales profits of legally distributed disc mediums against sales of disc mediums that are illegally produced before the content owner 110 authorizes movie theaters to show new movies.

The disc production factory combines those pieces of data received from the managing organization 120 with the HD-DVD disc image received from the editing and creating process 130, encrypts the HD-DVD disc image using a licensed encrypting technology under contract with the managing organization 120, and produces a disc master (original) (at step S127).

At step S120, namely in step S124 to step S127, it is assumed that the disc production factory and the managing organization 120 structure VPN using for example SSL or IPsec technology so that data can be transmitted and received through a secure network connection.

With the disc master (original), disc mediums are mass-produced (at step S128). A BCA is burnt on each disc medium that has been produced. In the BCA, a GUID that identifies a title and a global serial number that is unique to each medium are recorded (at step S129).

### <3. Description of disc reproducing apparatus>

Fig. 8 and Fig. 9 show a flow of a process of the reproducing apparatus for the digital video disc 160. Due to a limited drawing space, the flow of the process is divided into two portions shown in Fig. 8 and Fig. 9. Next, with reference to the block diagram showing the structure of the digital video disc reproducing apparatus 170 shown in Fig. 5, the operation of the reproducing apparatus into which a disc medium has been loaded will be described.

First of all, the reproducing apparatus reads the physical index recording area 161 from the loaded disc medium (at step S130). When the manufacturers of the reproducing apparatus and parts thereof formally contract with the managing organization 120, it will provide a reading method for the physical index recording area 161 to the manufacturers.

After the reproducing apparatus has read the physical index recording area 161, the reproducing apparatus determines whether or not it can correctly detect the physical index (at step S131). When the reproducing apparatus has not correctly detected the physical index, the reproducing apparatus stops the reproducing operation and informs the user that the reproducing apparatus has stopped the reproducing operation through the user interface. In the example, the reproducing apparatus reproduces data from only a reproduction-only disc medium. However, when the reproducing apparatus can reproduce data from a recordable disc medium that does not have a physical index, the reproducing apparatus may perform a process for reproducing data from the recordable disc medium.

When the reproducing apparatus has correctly detected the physical index, the reproducing apparatus reads data from the BCA and obtains the GUID and the global serial number therefrom (at step S132). The reproducing apparatus calculates a hash value of the global serial number and searches the reproduction disc medium list stored in the non-volatile memory 179 for the hash value (at step S133).

When the reproduction disc medium list has the hash value, the flow advances to step S135. When the reproduction disc medium list does not have the hash value, the reproducing apparatus stores the hash value to the non-volatile memory 179 (at step S134). When the digital video disc reproducing apparatus 170 and the managing organization 120 are securely connected through a network, the list is transferred from the digital video disc reproducing apparatus 170 to the managing organization 120. After the list has been transferred, the list is erased from the non-volatile memory 179 depending on the blank space of the memory.

The disc revocation list stored in the non-volatile memory 181 is searched for the hash value of the global serial number (at step S135). When the disc revocation list has the hash value, the reproducing apparatus determines that the disc medium should be revoked, stops the reproducing operation, and informs the user that the reproducing apparatus has stopped the reproducing operation through the user interface.

When the disc revocation list does not have the hash value, the reproducing apparatus reads the device revocation list, the disc revocation list, and the encrypted disc key from the lead-in area (at step S136). They are required to decrypt an encrypted video content. When the manufacturers of the reproducing apparatus and parts thereof formally contract with the managing organization 120, it will provide the decrypting technology for the encrypted video content to the manufacturers.

The reproducing apparatus determines whether or not it has correctly read the device revocation list and the disc revocation list. In addition, the reproducing apparatus determines whether it is not revoked in the device revocation list and whether or not an encrypted disc key has been correctly read (at step S137). When the determined result represents that the device revocation list and the disc revocation list have not been correctly read or that the video content has not been encryption-recorded for example the reproducing apparatus is revoked in the device revocation list and that the encrypted disc key has not been correctly read, the reproducing apparatus stops the reproducing operation and informs the user that the reproducing apparatus has stopped the reproducing operation through a user interface.

When the device revocation list, the disc revocation list, and the encrypted disc key have been correctly read, the signature list is read from the data area. These lists contain version information. When the reproducing apparatus has obtained a disc revocation list newer than the disc revocation list stored in the non-volatile memory 181, the reproducing apparatus updates the list stored in the non-volatile memory 181. When the reproducing apparatus has obtained a signature list newer than the signature list stored in the non-volatile memory 186, the reproducing apparatus updates the list stored in the non-volatile memory 186 (at step S138). The memories may have a FIFO (First-In First-Out) structure that stores a plurality of versions of the disc revocation lists and erase them in the order of an older version thereof. The reproducing apparatus starts the reproducing operation for the decrypted video content read from the data area (at step S139).

After the reproducing apparatus starts reproducing the data from the medium, the reproducing apparatus detects a video electronic watermark from the video signal (at step S140). When the reproducing apparatus has not detected the video electronic watermark in a predetermined time period or in a predetermined stream amount, the reproducing apparatus determines that the disc medium should have a video content that has been illegally edited and created. At that point, the reproducing apparatus stops the reproducing operation and informs the user that the reproducing apparatus has stopped the reproducing operation through the user interface. When the manufacturers of the reproducing apparatus and parts thereof formally contract with the managing organization 120, it will provide the technology for detecting the video electronic watermark to the manufacturers.

When the reproducing apparatus has detected the video electronic watermark in the predetermined time period or in the predetermined stream amount, the reproducing apparatus determines whether or not the electronic watermark information has the same value as the hash value of the GUID (at step S141). When they do not match, the reproducing apparatus determines that the disc medium should have a video content that has been illegally edited and created or the disc medium has been illegally produced, stops the reproducing operation, and informs the user that the reproducing apparatus has stopped the reproducing operation through the user interface. When they match, the reproducing apparatus continues the reproducing operation (at step S142).

While the reproducing apparatus is reproducing the video content, the reproducing apparatus calculates video fingerprinting data that is feature data of the video signal (at step S143). After the reproducing apparatus has calculated the data, the reproducing apparatus searches the signature list stored in the non-volatile memory 186 for the obtained video fingerprinting data (at step S144).

When the obtained video fingerprinting data has been registered, the reproducing apparatus determines that the reproduction disc medium should have a video content of which a movie shown in a movie theater has been illegally photographed as a source and that has been edited, created, and produced with the source, stops the reproducing operation, and informs the user that the reproducing apparatus has stopped the reproducing operation through the user interface. When the signature data has not been registered, the reproducing apparatus determines that the disc medium should have been edited, created, and produced under a formal contract and can securely perform the reproducing operation.

According to the first embodiment of the present invention, a GUID and a hash value thereof are recorded in two types of recording methods on the digital video disc 160. In other words, a GUID is recorded in the BCA of the disc medium. A hash value of a GUID is embedded as electronic watermark information in a video content that will be burnt on a digital video disc. The digital video disc reproducing apparatus 170 reads a GUID from the BCA and compares a hash value of the GUID that has been read from the BCA and electronic watermark information embedded in the video content. When they match, the digital video disc reproducing apparatus 170 performs the reproducing operation. Thus, the digital video disc reproducing apparatus 170 can determine that the content that has been edited by the editing and creating process 130 authorized by the managing organization 120 should have been recorded on the digital video disc 160 produced by the disc producing process (the mastering process 140 and the disc mass-producing process 150).

Thus, the digital video disc reproducing apparatus 170 can identify a disc medium of which an illegally obtained video signal has been edited by an illegally editing and creating process, produced by a disc production factory, and then distributed. The digital video disc reproducing apparatus 170 can restrict the reproduction for data of such an illegally distributed disc medium.

Regularly, CCI (Copy Control Information) is embedded as electronic watermark information in a video signal. However, when the electronic watermark information is "attacked", it cannot be detected and becomes invalidated. According to the first embodiment of the present invention, when information of a GUID embedded as electronic watermark information is correctly detected and the detected GUID information matches a GUID recorded in the BCA of the disc medium, the reproducing apparatus can perform the reproducing operation for the video signal. Thus, it is not useful to attack electronic watermark information so that it cannot be detected. As a result, it is not necessary to take countermeasures against an attack to the electronic watermark technology. Thus, since the applied electronic watermark technology becomes simple, it will contribute to the cost reduction thereof.

In addition, according to the first embodiment of the present invention, the mastering process 140 records a physical index issued by the managing organization 120 to the digital video disc 160. The physical index is multiplex-recorded in such a manner that it does not affect main data that is read from a reproduction-only disc medium. The digital video disc reproducing apparatus 170 performs the reproducing operation when the physical index is detected from the disc. As a result, the digital video disc reproducing apparatus 170 can determine whether or not the loaded disc is a reproduction-only disc medium that has been produced by a disc production factory authorized by the managing organization 120.

In addition, a video content recorded on the digital video disc 160 has been encrypted. Thus, the digital video disc reproducing apparatus 170 can determine whether or not the loaded disc medium is a disc medium that has been illegally produced and distributed by a disc production factory with an illegally obtained video signal by two means that are the ROM identifier 172 that detects a physical index for a reproduction-only disc medium and the encryption detector 174 that detects an encrypted video content. Thus, depending on the detected results of the ROM identifier 172 and the encryption detector 174, the digital video disc reproducing apparatus 170 can restrict the reproduction for the video content.

According to the first embodiment of the present invention, when discs whose production quantity exceeds a designated production quantity are tried to be produced, global serial numbers will be overlapped. The overlapped global serial numbers can be observed and detected by a managing server or the like of the managing organization 120 connected to the digital video disc reproducing apparatus 170 through a network. Thus, a disc production factory authorized by the managing organization 120 can be managed so that the factory cannot produce discs whose production quantity exceeds the formally ordered quantity. In addition, even if a hash value of a global serial number is leaked out on the network, it is impossible to identify a title with the hash value. As a result, the privacy of the user can be protected.

In addition, according to the first embodiment of the present invention, feature data that identifies a video content is calculated with a film content shown in a movie theater or the like using a technology such as fingerprinting. The obtained feature data is recorded on the digital video disc 160. In the digital video disc reproducing apparatus 170, the fingerprinting data calculating portion 187 calculates fingerprinting data of a video content that is being reproduced. The comparator 188 compares the obtained fingerprinting data with the newest signature list stored in the non-volatile memory 186. When they match, the digital video disc reproducing apparatus 170 stops the reproducing operation. Thus, the digital video disc reproducing apparatus 170 can determine whether or not the disc medium is an illegally distributed disc medium produced with a video signal illegally obtained from a movie shown in a movie theater. The digital video disc reproducing apparatus 170 can restrict the reproduction for a video content from the disc medium.

Next, with reference to the accompanying drawings, a reproduction restriction using a signature list and fingerprinting data according to the first embodiment will be described. Fig. 10 shows an example of the relation of showing periods of movies and reproduction restriction periods for illegally copied DVDs against reproduction timings for legally distributed DVDs. As shown in Fig. 10, it is assumed that new movies having titles A, B, C, and so forth will be shown in movie theaters and the reproduction for illegally distributed DVDs will be restricted until the legally distributed DVDs will be sold.

In the example shown in Fig. 10, when the digital video disc reproducing apparatus 170 reproduces data from a digital video disc having a title X, reproduction restricted titles of the fingerprinting database stored in the digital video disc reproducing apparatus 170 are changed to titles A, B, C, and so forth in accordance with the signature list recorded on the digital video disc having the title X.

When data is reproduced from the digital video disc having the title A, the reproduction restricted titles of the fingerprinting database stored in the digital video disc reproducing apparatus 170 are changed to the titles B, C, D, and so forth excluding the title A in accordance with a newer signature list than that of the digital video disc having the title X. Likewise, the reproduction restricted titles of the fingerprinting database stored in the digital video disc reproducing apparatus 170 are changed to the titles C, D, E, and so forth excluding the title B in accordance with a newer signature list than that of the digital video disc having the title A. Likewise, the reproduction restricted titles of the fingerprinting database stored in the digital video disc reproducing apparatus 170 are changed in accordance with the newest signature list.

The reproducing apparatus compares the signature list of a plurality of entries of fingerprinting data generated in the foregoing manner and the fingerprinting data reproduced from the DVD. When they match, the digital video disc reproducing apparatus 170 restricts the reproduction for the disc.

Fig. 11 shows an example of the structure of a signature list. A signature list shown in Fig. 11 is composed of version information and entries of fingerprinting data for the titles A, B, and C. Each entry of fingerprinting data is composed of a title ID and extracted feature data. When the fingerprinting data reproduced from the digital video disc matches fingerprinting data contained in the signature list stored in the digital video disc reproducing apparatus 170, the reproducing apparatus restricts the reproducing operation for the disc.

Next, as a modification of the first embodiment, the case that a region code is used will be described. When the reproduction for a title is restricted, the title ID of fingerprinting data of the title is stored in the non-volatile memory of the digital video disc reproducing apparatus 170. When the digital video disc reproducing apparatus 170 is securely connected to a copyright managing server authorized by the managing organization 120, the title ID is transferred to the copyright managing server along with the region code of the digital video disc reproducing apparatus 170. As a result, the copyright managing server can know what titles of movies have been illegally distributed to what regions. Thus, distributors who have illegally distributed illegal copies can be quickly detected. If the digital video disc reproducing apparatus 170 is provided with a GPS (Global Positioning System), when the digital video disc reproducing apparatus 170 also transfers its position information to the copyright managing server, it can more easily detect the region of the reproducing apparatus than the reproducing apparatus that is not provided with the GPS. To detect only the region, the title ID is not always required. In this case, the digital video disc reproducing apparatus 170 need to inform the server only whether or not the reproducing apparatus has detected an illegal copy.

Fig. 12 shows an example of an updated signature list using region codes in the case that sales dates of digital video discs are different in regions. Besides a signature list, a region code that allows the digital video disc reproducing apparatus 170 to perform the reproducing operation is pre-recorded on a digital video disc 160. With a list selector 202, a signature list is selected in accordance with a region code 203 of the player so as to update data stored in the non-volatile memory 186. As a result, titles of movies whose reproduction is restricted can be changed for each region.

Likewise, when the newest signature list is received from the copyright managing server 201 that the managing organization 120 has, the copyright managing server 201 is provided with signature lists in accordance with region codes. With a list selector 204, a signature list in accordance with the region code 203 of the player is selected. Data stored in the non-volatile memory 186 is updated in accordance with the selected signature list. As a result, titles of movies whose reproduction is restricted can be changed for each region.

According to the first embodiment, it is supposed that unique disc numbers are global serial numbers that are sequentially assigned. Alternatively, unique disc numbers may be assigned at random. According to a second embodiment of the present invention, unique disc numbers are assigned at random in the structure according to the first embodiment.

Next, with reference to the accompanying drawings, the second embodiment of the present invention will be described. Fig. 13 to Fig. 15 show an example of an overall system structure composed of a creating process, a producing process, and a reproducing apparatus for a digital video disc. Due to a limited drawing space, the overall system is divided into three portions shown in Fig. 13 to Fig. 15.

A content owner 110 has a copyright of a video content. The content owner 110 is a person or an organization who intends to make a mass-production order of digital video discs so as to get profits from their sales.

A managing organization 120 is a managing organization that manages copyright protection technologies. When the managing organization 120 is requested from the content owner 110, the managing organization 120 provides copyright protection technologies and information thereof to the editing and creating process, the producing process, and the reproducing apparatus that have formally contracted with the managing organization 120, properly manages the technologies and information thereof, and has a function for preventing contents of digital video discs from being illegally copied.

An editing and creating process 130 is an editing and creating process that edits and creates a video content that the content owner 110 has requested. The editing and creating process 130 is disposed in a studio or the like that edits digital video discs. A mastering process 140 is a process that produces an original from which digital video discs are mass-copied. The mastering process 140 is disposed in a disc production factory or the like. A disc mass-producing process 150 is a process that mass-produces digital video discs. The disc mass-producing process 150 is disposed in the disc production factory or the like.

A digital video disc 160 is a mass-produced read-only digital video disc medium. Video and audio signals are mainly recorded on the digital video disc 160. A digital video disc reproducing apparatus 170 is a reproducing apparatus for the digital video disc 160.

A video content issuing portion 111 issues a video content to be recorded on the digital video disc 160. In Fig. 13 to Fig. 15, a video content is directly sent from the content owner 110 to the editing and creating process 130. Alternatively, a video content may be sent through the managing organization 120. An illegal copy distribution investigating portion 112 is an organization that investigates illegally distributed copies. In this example, the illegally copy distributing portion 112 investigates copied mediums that have been illegally created, produced, and distributed in the market. Currently, a contracted investigation company performs the market investigation. A disc mass-production quantity issuing portion 113 designates the mass-production quantity of the digital video discs 160 of the title that the content owner 110 orders. In Fig. 13 to Fig. 15, the disc mass-production quantity is directly designated from the content owner 110 to the editing and creating process 130. Alternatively, the disc mass-production quantity may be designated through the managing organization 120.

A movie film issuing portion 114 is a portion that issues a new movie film. Although a new movie shown in a movie theater is regularly distributed as a film, compressed video data is distributed to a digital cinema. To prevent a movie shown in a movie theater from being photographed by a camera or the like or a video signal that is tele-cine converted from being illegally mass-produced as video discs 160, a signature list is calculated with a film content to be protected using a fingerprinting technology or the like. The obtained signature list is pre-recorded in the reproducing apparatus. As a result, the reproducing apparatus can identify an illegally distributed content.

A GUID issuing portion 121 issues a global unique ID (GUID) that is distributed for each title. A GUID is used as title information that represents the title of a video content. For example, a GUID is provided by a copyright managing server authorized by the managing organization 120 through a network. A disc key issuing portion 122 issues a disc key that is a piece of key information necessary for obtaining a content key and that is pre-recorded on the digital video disc 160.

A physical index issuing portion 123 issues a physical index that is pre-recorded on the digital video disc 160 so as to identify a disc medium as a reproduction-only medium. According to the second embodiment, a physical index is also used as key information with which a content key is obtained. A physical index is recorded on only a reproduction-only medium. A physical index is recorded on other than a channel for a regular data area in such a manner that the physical index cannot be copied. When a physical index is recorded on the digital video disc 160, it can be determined as a disc medium that has been produced through a legal process.

A signature list issuing portion 124 calculates feature data that identifies a video content, which has been illegally created and produced, using for example a fingerprinting technology. The signature list issuing portion 124 makes up a list of 100 titles for example 100, adds a list version thereto, and issues the list.

A device/disc revocation list issuing portion 125 issues data that identifies a reproducing apparatus for a video content that has been illegally created and produced or a video content itself. An illegal copy observing portion 126 is an observing organization that detects a copied medium that has been illegally created, produced, and distributed in the market in accordance with data collected from the video content reproducing apparatus.

A device ID & device key issuing portion 128 issues a device ID and a device key stored in a non-volatile memory of the digital video disc reproducing apparatus 170. A device ID is used to identify the digital video disc reproducing apparatus 170 in accordance with a device revocation list pre-recorded on the digital video disc 160. In addition, a device ID is used to obtain a reading method for a device key and a disc key pre-recorded on the digital video disc 160 from the device revocation list pre-recorded on the digital video disc 160.

A video WM embedder 131 is a device that embeds electronic watermark information in a video content. The video WM embedder 131 calculates a hash value of a GUID and embeds the hash value as electronic watermark information in a video signal. To cause a value embedded as a video electronic watermark in a video signal and a value recorded to a BCA 162 (that will be described later) to become not correlative, a hash value is used. A hash value of a GUID is used as a title message necessary for assuring the trueness of the GUID. Since the electronic watermark and the hash value have been already described in the first embodiment, their description in the second embodiment will be omitted.

An MPEG2 encoder 132 is a video compression encoder. In this example, the MPEG2 system is used. However, another compressing system other than the MPEG2 system may be used. The MPEG2 encoder 132 includes an operation for forming a file that can be managed by a file system. A GUID is recorded in a volume descriptor.

A video encryptor 141 is a process that encrypts a video content with a disc key and a content key that is obtained from a physical index. A formatter 142 is a process that produces an original from which the digital video discs 160 are mass-produced with an encrypted video content, a disc key used to encrypt the video content, a physical index, a signature list that identifies a video content that has been illegally distributed, a disc revocation list that identifies an illegally copied disc, and a device revocation list that identifies a reproducing apparatus that has been illegally produced or modified. A replicater 151 is a producing process that mass-produces digital video discs 160 from an original.

A content protecting system 171 is a mechanism that controls a copyright protecting technology. The content protecting system 171 has a mechanism that stores a device ID, a device key, a disc: revocation list and a disc unique number of the digital video disc 160 from which data is reproduced and a scheme that reports the disc unique number of the reproduction medium and a device ID of the digital video disc reproducing apparatus 170 to the managing organization 120 in a predetermined condition. In addition, the content protecting system 171 has a mechanism that references a device revocation list, a disc revocation list, and a signature list, detects an illegally reproducing state in accordance therewith, and restricts the reproducing operation.

A disc unique number issuing portion 127 issues disc unique numbers recorded on discs that will be mass-produced in accordance with a disc mass-production quantity issued by the disc mass-production quantity issuing portion 113. A disc unique number is composed of a random number and a verification value thereof. The random number is obtained as a random number of which a serial number or the like unique in all titles is scrambled. The verification value is calculated with MDC (Message Digest Code) or MAC (Message Authentication Code) using a key of a GUID. The disc unique number is used to identify each disc.

Fig. 16 shows an example of the structure of a data recording area of the digital video disc 160. A physical index recording area 161 is an area for a physical index. A physical index is multiplex-recorded in such a manner that it does not affect main data that is read. In the recording method, even if main data is read from all the disc area and copied, since the physical index of the multiplexed portion is not copied, this recording method is effective for a whole copying operation (bit-by-bit copying operation).

A BCA 162, a burst cutting area, is an area for a GUID that identifies a title and a disc unique number that is unique to each disc. After data is recorded on a disc medium, the BCA is recorded thereon. Since a real recording method for the physical index and the BCA has been described in the first embodiment, the method will not be redundantly described in the following.

The device revocation list, the disc revocation list, and the disc key are recorded in other than an area for a video content for example a lead-in area 163 in such a manner that they cannot be rewritten.

A data area 164 is a data area for an encrypted video content in which a hash value of a GUID has been embedded as electronic watermark information.

Fig. 17 shows an example of the structure of the digital video disc reproducing apparatus 170 that reproduces data from the digital video disc 160. A ROM identifier 172 determines whether or not a disc loaded into the digital video disc reproducing apparatus 170 is a read-only digital video disc 160. When the determined result represents that the loaded disc is a read-only digital video disc 160, a switch SW11 is turned on. Otherwise, the switch SW11 is turned off.

A decryptor 173 decrypts an encrypted video content. An encryption detector 174 determines whether or not the digital video disc reproducing apparatus 170 has been revoked and whether or not a video content recorded on the digital video disc 160 has been encrypted. When the determined results represent that the reproducing apparatus has not been revoked and that the video content has been encrypted, a switch SW12 is turned on. Otherwise, the switch SW12 is turned off.

MPEG2 decoders 175 and 192 each decompresses a compressed video signal and obtains a base band video signal. A video WM detector 176 detects video electronic watermark information from the video content. After the electronic watermark information has been detected, the video WM detector 176 calculates a hash value of the GUID recorded in the BCA 162 and compares the hash value and the electronic watermark information. When they do not match, a switch SW13 is turned off. When they match or when the electronic watermark information has not been detected, the switch SW13 is turned on.

A disc revocation checker 177 is a process that compares a disc unique number recorded in the BCA 162 and a value registered in a disc revocation list stored in the non-volatile memory of the reproducing apparatus and determines whether or not the disc unique number has been registered in the disc revocation list. When they match, the disc revocation checker 177 determines that the digital video disc 160 should be revoked. At that point, a switch SW14 is turned off. When they do not match, the switch SW14 is turned on.

A non-volatile memory 179 is a non-volatile memory that stores a disc unique number as a record of a medium from which the reproducing apparatus has reproduced data. When the managing organization 120 is connected to the digital video disc reproducing apparatus 170 through a network, the record data for the reproduction medium stored in the non-volatile memory 179 is transferred to the managing organization 120 along with a device ID 189 and a device serial number 191. After the record data has been transferred to the managing organization 120, the record data is erased from the non-volatile memory 179 so as to secure a blank space. When the managing organization 120 and the digital video disc reproducing apparatus 170 are connected through a network, it is assumed that an encryption communication such as SSL authentication or VPN based on IPsec encryption is performed.

When the disc revocation list recorded on the digital video disc 160 is stored in a non-volatile memory 181, a version checker 180 compares the version of the disc revocation list that has been stored and the version of the disc revocation list recorded on the digital video disc 160. When the version of the data recorded on the digital video disc 160 is newer than the version of the data that has been stored, a switch SW16 is turned on so as to update the data of the disc revocation list stored in the non-volatile memory 181.

The non-volatile memory 181 is a non-volatile memory that stores a disc revocation list. The disc revocation list may be transferred from the managing organization 120 when it is connected to the digital video disc reproducing apparatus 170 through a network. At that point, in the same process as the disc revocation list that is updated with the medium, data stored in the non-volatile memory 181 is updated.

When the signature list recorded on the digital video disc 160 is stored in a non-volatile memory 186, a version checker 185 compares the version of the signature list that has been stored and the version of the signature list recorded on the digital video disc 160. When the version of the data recorded on the digital video disc 160 is newer than the version of the data that has been stored, a switch SW17 is turned on so as to update data stored in the non-volatile memory 186.

The non-volatile memory 186 is a non-volatile memory that stores a signature list of a plurality of titles for example 100 titles. The 100 titles are for example new movies that are currently shown in movie theaters, neither having been mass-produced, nor having been sold as digital video discs 160. When the reproducing apparatus reproduces a movie content listed in the signature list, it is assumed that the movie content has been illegally distributed.

A signature list may be transferred from the managing organization 120 when it is connected to the digital video disc reproducing apparatus 170 through a network. In this case, in the same process as the signature list that is updated with the medium, data stored in the non-volatile memory 186 is updated.

A fingerprinting data calculating portion 187 is a process that calculates fingerprinting data with a video content that is being reproduced.

A comparator 188 is a process that compares the signature list calculated by the fingerprinting data calculating portion 187 with a signature list that is stored in the non-volatile memory 186 and that identifies a content that has been illegally distributed. When the fingerprinting data calculating portion 187 has not finished the calculation, a switch SW15 is turned on. When the fingerprinting data calculating portion 187 has finished the calculation and the value has been registered in the signature list stored in the non-volatile memory 186, it is assumed that the reproduced content is an illegally distributed content. In this case, the switch SW15 is turned off so as to stop the reproducing operation for the content. Alternatively, a message that represents that an illegally distributed content is being reproduced is superimposed on the reproduction screen so as to inform the user thereof.

The device ID 189 is identification data for the digital video disc reproducing apparatus 170. The device ID 189 is unique to each manufacturer of the reproducing apparatus or each model thereof.

A device key 190 is combined with data calculated from the device ID 189 and the disc revocation list so as to obtain an encrypted secret disc key recorded on the digital video disc 160.

A device serial number 191 is a production serial number that uniquely identifies the digital video disc reproducing apparatus 170 and that is designated by the manufacturer thereof.

The switch SW11 is a switch that controls the reproduction for a video content in accordance with the determined result of the ROM identifier 172. The switch SW12 is a switch that controls the reproduction for a video content in accordance with the determined result of the encryption detector 174. The switch SW13 is a switch that controls the reproduction for a video content in accordance with the determined result of the video WM detector 176. The switch SW14 is a switch that controls the reproduction for a video content in accordance with the determined result of the disc revocation checker 177. The switch SW15 is a switch that controls the reproduction for a video content in accordance with the determined result of the comparator 188. The switch SW16 is a switch that controls the storage of the disc revocation list in accordance with the determined result of the version checker 180. The switch SW17 is a switch that controls the storage of the signature list in accordance with the determined result of the version checker 185.

### <1. Description of editing and creating process>

Fig. 18 shows a flow of an editing and creating process for the digital video disc 160. Next, with reference to the block diagrams showing the overall system structure of Fig. 13 to Fig. 15, the editing and creating process for the digital video disc 160 shown in Fig. 18 will be described.

When a video content with which a digital video disc is created is received from the content owner 110, an editing and creating project starts. When the editing and creating project for creating the digital video disc is started, the editing and creating process 130 requests the managing organization 120 to issue a GUID (at step S311). In Fig. 18, CA represents the managing organization 120.

When the managing organization 120 has been requested to issue a GUID, the managing organization 120 issues a GUID for each title (at step S312). When the editing and creating process 130 has received a GUID, at step S314, the editing and creating process 130 embeds a hash value of the GUID in the video content (at step S313).

When the video WM embedder 131 that has received the GUID under contract with the managing organization 120 calculates a hash value of the GUID, the video WM embedder 131 embeds the hash value as electronic watermark information in a video signal of the video content (at step S314).

At step S310, namely in step S311 to step S314, it is assumed that the editing and creating process 130 and the managing organization 120 structure VPN using for example SSL or IPsec technology so that data can be transmitted and received through a secure network connection.

Along with the video signal in which the hash value has been embedded as electronic watermark information, an audio signal of the video content, a sub title such as superimposed text, a menu for video contents, and data and a program necessary for accomplishing an interactive function are encoded (at step S315).

Data of each file are multiplexed. The GUID is recorded in a volume descriptor that is file system management information (at step S316). To perform the disc producing process, an HD-DVD disc image is written to a master format (at step S317).

### <2. Description of disc producing process>

Fig. 19 shows a flow of a producing process for the digital video disc 160. Next, with reference to the block diagrams showing the overall system structure of Fig. 13 to Fig. 15 and the schematic diagram showing the relation of the disc medium of Fig. 16, the flow of the producing process for the digital video disc 160 shown in Fig. 19 will be described.

An HD-DVD disc image is received from the editing and creating process 130 (at step S321). The GUID is read from the volume descriptor. The obtained GUID is transferred from the disc production factory to the managing organization 120 (at step S322).

When the content owner 110 has provided the video content to be edited and created to the editing and creating process 130, the content owner 110 has also designated the disc mass-production quantity for an order to the disc production factory (at step S323).

When the disc production factory has received the order for the disc mass-production from the content owner 110, the disc production factory transfers the GUID and the ordered disc quantity to the managing organization 120. The disc production factory requests the managing organization 120 to issue disc unique numbers for the discs to be produced (at step S324).

The managing organization 120 identifies the title of the video content in accordance with the GUID received from the disc production factory. In addition, the managing organization 120 accurately calculates unused disc unique numbers for the disc mediums to be produced in accordance with the received ordered disc quantity (at step S325). Each of the disc unique numbers is composed of a unique random number and a verification value. A verification value is calculated by for example MDC or MAC using the GUID as a key.

The managing organization 120 authorizes the disc production factory to produce discs, namely transfers a disc key necessary for encrypting the HD-DVD disc image, a set of disc unique numbers, a device revocation list, a disc revocation list, and a signature list to the disc production factory (at step S326). The device revocation list is data with which the reproducing operation of an illegally produced disc reproducing apparatus is restricted for data of a legally distributed disc medium. On the other hand, the disc revocation list is data with which the reproducing operation of a legally produced disc reproducing apparatus is restricted for data of an illegally produced disc medium.

The signature list is a database that has a plurality of entries of video fingerprinting data that identify movies that are currently shown and will be shown in movie theaters so as to prevent the content owner 110 from loosing sales profits from movie theaters for new movies and sales profits of legally distributed disc mediums against sales of disc mediums that are illegally produced before the content owner 110 authorizes movie theaters to show new movies.

The disc production factory combines those pieces of data received from the managing organization 120 with the HD-DVD disc image received from the editing and creating process 130, encrypts the HD-DVD disc image using a licensed encrypting technology under contract with the managing organization 120, and produces a disc master (original) (at step S327).

At step S320, namely in step S324 to step S327, it is assumed that the disc production factory and the managing organization 120 structure VPN using for example SSL or IPsec technology so that data can be transmitted and received through a secure network connection.

With the disc master (original), disc mediums are mass-produced (at step S328). A BCA is burnt on each disc medium that has been produced. In the BCA, a GUID that identifies a title and a disc unique number that is unique to each medium are recorded (at step S329).

### <3. Description of disc reproducing apparatus>

Fig. 20 and Fig. 21 show a flow of a process of the reproducing apparatus for the digital video disc 160. Due to a limited drawing space, the flow of the process is divided into two portions shown in Fig. 20 and Fig. 21. Next, with reference to the block diagram showing the structure of the digital video disc reproducing apparatus 170 shown in Fig. 17, the operation of the reproducing apparatus into which a disc medium has been loaded will be described.

First of all, the reproducing apparatus reads the physical index recording area 161 from the loaded disc medium (at step S330). When the manufacturers of the reproducing apparatus and parts thereof formally contract with the managing organization 120, it will provide a reading method for the physical index recording area 161 to the manufacturers.

After the reproducing apparatus has read the physical index recording area 161, the reproducing apparatus determines whether or not it can correctly detect the physical index (at step S331). When the reproducing apparatus has not correctly detected the physical index, the reproducing apparatus determines that the loaded disc medium should not be a reproduction-only disc medium having an encrypted content that conforms with an encryption system according to the second embodiment and performs a fingerprinting data checking process (that will be described later). When the reproducing apparatus reproduces data from only a reproduction-only disc medium, the reproducing apparatus may stop the reproducing operation and inform the user that the reproducing apparatus has stopped the reproducing operation.

When the reproducing apparatus has correctly detected the physical index, the reproducing apparatus reads data from the BCA and obtains the GUID and the disc unique number therefrom (at step S332). The reproducing apparatus checks the validity of the obtained disc unique number with a verification value (at step S333). When the reproducing apparatus has not successfully checked the validity, the reproducing apparatus determines that the loaded disc medium should be an illegally produced disc medium, stops the reproducing operation, and informs the user that the reproducing apparatus has stopped the reproducing operation through the user interface. When the reproducing apparatus has not successfully checked the validity, the flow advances to step S334.

The reproducing apparatus searches a reproduction disc medium list stored in the non-volatile memory 179 so as to determine whether or not the reproducing apparatus has reproduced data from a reproduction-only disc medium that has the same value as the disc unique number (at step S334).

When the reproduction disc medium list has the same value as the disc unique number, the flow advances to step S336. When the reproduction disc medium list does not have the same value as the disc unique number, the reproducing apparatus stores the value to the non-volatile memory 179 (at step S335). When the digital video disc reproducing apparatus 170 and the managing organization 120 are securely connected through a network, the list is transferred from the digital video disc reproducing apparatus 170 to the managing organization 120. After the list is transferred to the managing organization 120, the list is erased from the non-volatile memory 179 depending on the blank space of the memory.

The reproducing apparatus searches the disc revocation list stored in the non-volatile memory 181 for the value of the disc unique number (at step S336). When the disc revocation list has the same value as the disc unique number, the reproducing apparatus determines that the reproduction disc medium should be revoked, stops the reproducing operation, and informs the user that the reproducing apparatus has stopped the reproducing operation through the user interface.

When the disc revocation list does not have the same value as the disc unique number, the reproducing apparatus reads the device revocation list, the disc revocation list, and an encrypted disc key from the lead-in area (at step S337). Those information is required to decrypt the encrypted video content recorded on the disc. When the manufacturers of the reproducing apparatus and parts thereof formally contract with the managing organization 120, it will provide the technology for decrypting the encrypted video content to the manufacturers.

The reproducing apparatus determines whether or not it has correctly read the device revocation list and the disc revocation list. In addition, the reproducing apparatus determines whether it is not revoked in the device revocation list and whether or not an encrypted disc key has been correctly read (at step S338). When the determined result represents that the device revocation list and the disc revocation list have not been correctly read or that the video content has not been encryption-recorded for example the reproducing apparatus is revoked in the device revocation list and that the encrypted disc key has not been correctly read, the reproducing apparatus determines that the loaded disc medium should not be a reproduction-only disc medium that has an encrypted content that conforms with the encryption system according to the second embodiment. Thereafter, the reproducing apparatus performs the fingerprinting data checking process (that will be described later). As an example of an operating method for the copyright protection technology, means for stopping the reproducing operation and informing the user that the reproducing apparatus has stopped the reproducing operation through a user interface may be disposed.

When the device revocation list, the disc revocation list, and the encrypted disc key have been correctly read, the signature list is read from the data area. These lists contain version information. When the reproducing apparatus has obtained a disc revocation list newer than the disc revocation list stored in the non-volatile memory 181, the reproducing apparatus updates the list stored in the non-volatile memory 181. When the reproducing apparatus has obtained a signature list newer than the signature list stored in the non-volatile memory 186, the reproducing apparatus updates the list stored in the non-volatile memory 186 (at step S339). The memories may have a FIFO (First-In First-Out) structure that stores a plurality of versions of the disc revocation lists and erase them in the order of an older version thereof. The reproducing apparatus starts the reproducing operation for the decrypted video content read from the data area (at step S340).

After the reproducing apparatus starts reproducing the data from the medium, the reproducing apparatus detects a video electronic watermark from the video signal (at step S341). When the reproducing apparatus has not detected the video electronic watermark in a predetermined time period or in a predetermined stream amount, the reproducing apparatus determines that the disc medium should have a video content that has been illegally edited and created. At that point, the reproducing apparatus stops the reproducing operation and informs the user that the reproducing apparatus has stopped the reproducing operation through the user interface. When the manufacturers of the reproducing apparatus and parts thereof formally contract with the managing organization 120, it will provide the technology for detecting the video electronic watermark to the manufacturers.

When the reproducing apparatus has detected the video electronic watermark in the predetermined time period or in the predetermined stream amount, the reproducing apparatus determines whether or not the electronic watermark information has the same value as the hash value of the GUID (at step S342). When they do not match, the reproducing apparatus determines that the disc medium should have a video content that has been illegally edited and created or the disc medium has been illegally produced, stops the reproducing operation, and informs the user that the reproducing apparatus has stopped the reproducing operation through the user interface. When they match, the reproducing apparatus continues the reproducing operation.

When the determined result represents that the loaded disc medium is not a reproduction-only disc medium having an encrypted content that conforms with the encryption system according to the second embodiment, namely, when a video content is reproduced from a reproduction-only disc medium on which non-encrypted video content has been recorded, a recordable disc medium, or a different format disc medium such as DVD SVCD, the reproducing apparatus calculates fingerprinting data with data reproduced from the disc medium so as to determine whether or not the content recorded on the disc medium is an illegally distributed content. Fig. 22 shows a flow of the process performed at that point.

In the process for checking the fingerprinting data shown in Fig. 22, while a video content is being reproduced, video fingerprinting data that is feature data of a video signal is calculated (at step S343). After the video fingerprinting data has been calculated, a signature list stored in the non-volatile memory 186 is searched for the calculated video fingerprinting data (at step S344).

When the fingerprinting data has been registered, the reproducing apparatus determines that the reproduction disc medium should have a video content of which a movie shown in a movie theater has been illegally photographed as a source and that has been edited, created, and produced with the source, stops the reproducing operation, and informs the user that the reproducing apparatus has stopped the reproducing operation through the user interface. When the fingerprinting data has not been registered, the reproducing apparatus determines that the disc medium should have been edited, created, and produced under a formal contract and can securely perform the reproducing operation.

According to the second embodiment of the present invention, a GUID and a hash value thereof are recorded in two types of recording methods on the digital video disc 160. In other words, a GUID is recorded in the BCA of the disc medium. A hash value of a GUID is embedded as electronic watermark information in a video content that will be burnt on a digital video disc. The digital video disc reproducing apparatus 170 reads a GUID from the BCA and compares a hash value of the GUID that has been read from the BCA and electronic watermark information embedded in the video content. When they match, the digital video disc reproducing apparatus 170 performs the reproducing operation. Thus, the digital video disc reproducing apparatus 170 can determine that the content that has been edited by the editing and creating process 130 authorized by the managing organization 120 should have been recorded on the digital video disc 160 produced by the disc producing process (the mastering process 140 and the disc mass-producing process 150).

Thus, the digital video disc reproducing apparatus 170 can identify a disc medium of which an illegally obtained video signal has been edited by an illegally editing and creating process, produced by a disc production factory, and then distributed. The digital video disc reproducing apparatus 170 can restrict the reproduction for data of such an illegally distributed disc medium.

In addition, according to the second embodiment of the present invention, when information of a GUID embedded as electronic watermark information is correctly detected and the detected GUID information matches a GUID recorded in the BCA of the disc medium, the reproducing apparatus can perform the reproducing operation for the video signal. Thus, it is not useful to attack electronic watermark information so that it cannot be detected. As a result, it is not necessary to take countermeasures against an attack to the electronic watermark technology. Thus, since the applied electronic watermark technology becomes simple, it will contribute to the cost reduction thereof.

In addition, according to the second embodiment of the present invention, the mastering process 140 records a physical index issued by the managing organization 120 to the digital video disc 160. The physical index is multiplex-recorded in such a manner that it does not affect main data that is read from a reproduction-only disc medium. The digital video disc reproducing apparatus 170 performs the reproducing operation when the physical index is detected from the disc. As a result, the digital video disc reproducing apparatus 170 can determine whether or not the loaded disc is a reproduction-only disc medium that has been produced by a disc production factory authorized by the managing organization 120.

In addition, a video content recorded on the digital video disc 160 has been encrypted. Thus, the digital video disc reproducing apparatus 170 can determine whether or not the loaded disc medium is a disc medium that has been illegally produced and distributed by a disc production factory with an illegally obtained video signal by two means that are the ROM identifier 172 that detects a physical index for a reproduction-only disc medium and the encryption detector 174 that detects an encrypted video content. Thus, depending on the detected results of the ROM identifier 172 and the encryption detector 174, the digital video disc reproducing apparatus 170 can restrict the reproduction for the video content.

According to the second embodiment of the present invention, when discs whose production quantity exceeds a designated production quantity are tried to be produced, unique random numbers of disc unique numbers will be overlapped. The overlapped unique random numbers can be observed and detected by a managing server or the like of the managing organization 120 connected to the digital video disc reproducing apparatus 170 through a network. Thus, a disc production factory authorized by the managing organization 120 can be managed so that the factory cannot produce discs whose production quantity exceeds the formally ordered quantity. In addition, even if a random value of a global serial number is leaked out on the network, it is impossible to identify a title with the disc unique number. As a result, the privacy of the user can be protected.

In addition, according to the second embodiment of the present invention, feature data that identifies a video content is calculated with a film content shown in a movie theater or the like using a technology such as fingerprinting. The obtained feature data is recorded as a signature list on the digital video disc 160. In the digital video disc reproducing apparatus 170, the fingerprinting data calculating portion 187 calculates fingerprinting data of a video content that is being reproduced. The comparator 188 compares the obtained video fingerprinting data with the newest signature list stored in the non-volatile memory 186. When they match, the digital video disc reproducing apparatus 170 stops the reproducing operation. Thus, the digital video disc reproducing apparatus 170 can determine whether or not the disc medium is an illegally distributed disc medium produced with a video signal illegally obtained from a movie shown in a movie theater. The digital video disc reproducing apparatus 170 can restrict the reproduction for a video content from the disc medium.

A real example of the restriction of the reproducing operation using the signature list and fingerprinting data is the same as that described with reference to Fig. 10 in the first embodiment. Thus, the description about the restriction of the reproducing operation according to the second embodiment will be omitted.

Although the present invention has been shown and described with respect to best mode embodiments thereof, it should be understood by those skilled in the art that the foregoing and various other changes, omissions, and additions in the form and detail thereof may be made therein without departing from the spirit and scope of the present invention. For example, according to the first and second embodiments, a GUID is assigned to each title. Alternatively, as long as each title can be identified, a GUID may be assigned in another manner, for example, it may be assigned to each production order for digital video discs.

In addition, according to the first and second embodiments, a GUID is recorded in the BCA and a hash value of the GUID is recorded as electronic watermark information of a video content. However, it is necessary to assure the trueness of only the value of the electronic watermark information and the value of the BCA. Thus, a GUID and a hash value thereof may be recorded in a manner that for example a GUID is recorded as electronic watermark information of a video content and a hash value of the GUID is recorded in the BCA.

In addition, according to the first and second embodiments, a physical index is multiplex-recorded in a part of the data area. Alternatively, the physical index may be multiplex-recorded in all the data area, the lead-in area, or the like. In addition, according to the first and second embodiments, after a video content in which an electronic watermark has been embedded is recorded, a GUID or the like is recorded in the BCA. However, the recording order of these data is not limited to that.

In addition, according to the first and second embodiments, before a medium is produced by a replicater, a revocation list and a disc key are recorded in the lead-in area. Alternatively, when their data amount is large, they may be encrypted and recorded in the data area.

In the first embodiment, an application using a region code was described. Likewise, in the second embodiment, a region code can be used.

In addition, according to the first and second embodiments, after a determination with a global serial number or a disc unique number is performed, a determination with a signature list is performed. However, the order of the determinations is not limited to that.

According to the first and second embodiments, as a recording medium for a video content, an optical disc was described. Alternatively, the present invention can be applied to another reproduction-only recording medium such as a magnetic disc, a magnetooptical disc, an optical card, or a memory card.

As described above, according to the present invention, since the reproducing apparatus records the newest list of a plurality of entries of video fingerprinting data in accordance with a plurality of video contents whose reproduction is not permitted, when the reproducing apparatus reproduces data from a recording medium, the reproducing apparatus extracts video fingerprinting data from the video content to be reproduced, determines whether or not the recording medium is a legally distributed disc in accordance with the extracted video fingerprinting data and the list, and restricts the reproduction for the recording medium. Thus, the copyright owner can be protected against illegally copied video contents.

## Claims

1. A recording medium on which data of a video content has been recorded,
wherein a video fingerprinting data list has been recorded on the recording medium, the video fingerprinting data list being a list of entries of video fingerprinting data extracted from a plurality of video contents whose reproduction has not been permitted by a copyright supervisor.

2. The recording medium as set forth in claim 1,
wherein the video fingerprinting data list has version information.

3. A recording medium producing method for producing a recording medium on which data of a video content has been recorded, the method comprising the steps of:
editing the data of the video content; and
recording a video fingerprinting data list of entries of video fingerprinting data extracted from a plurality of video contents whose reproduction has not been permitted by a copyright supervisor.

4. The recording medium producing method as set forth in claim 3,
wherein the video fingerprinting data list has version information.

5. A reproducing method for reproducing data of a video content from a recording medium, the reproducing method comprising the steps of:
reading from the recording medium a video fingerprinting data list of entries of video fingerprinting data extracted from a plurality of video contents whose reproduction has not been permitted by a copyright supervisor;
extracting video fingerprinting data from a video content that is reproduced in the same manner as video fingerprinting data that has been extracted from the recording medium;
determining whether or not the video fingerprinting data that has been extracted from the video content is contained in a video fingerprinting data list stored in a memory or the video fingerprinting data list that has been read at the data list reading step; and
restricting a reproducing operation for the recording medium when the determined result at the data list determining step represents that the extracted video fingerprinting data is contained.

6. The reproducing method as set forth in claim 5,
wherein the video fingerprinting data list has version information.

7. The reproducing method as set forth in claim 6, further comprising the steps of:
determining the version information; and
updating the video fingerprinting data list stored in the memory when the determined result at the version determining step represents that the version information of the video fingerprinting data list recorded on the recording medium is newer than the version information of the video fingerprinting data list stored in the memory.

8. The reproducing method as set forth in claim 7, further comprising the step of:
causing a copyright managing server to update the video fingerprinting data list stored in the memory, the copyright managing server being connected to the memory through a network.

9. A reproducing apparatus for reproducing data of a video content from a recording medium, the reproducing apparatus comprising:
a data list reading portion for reading from the recording medium a video fingerprinting data list of entries of video fingerprinting data extracted from a plurality of video contents whose reproduction has not been permitted by a copyright supervisor;
an extracting portion for extracting video fingerprinting data from a video content that is reproduced in the same manner as video fingerprinting data that has been extracted from the recording medium;
a data list determining portion for determining whether or not the video fingerprinting data that has been extracted from the video content is contained in a video fingerprinting data list stored in a memory or the video fingerprinting data list that has been read at the data list reading step; and
a controlling portion for restricting a reproducing operation for the recording medium when the determined result of the data list determining portion represents that the extracted video fingerprinting data is contained.

10. The reproducing apparatus as set forth in claim 9,
wherein the video fingerprinting data list has version information.

11. The reproducing apparatus as set forth in claim 10, further comprising:
a version determining portion for determining the version information; and
means for updating the video fingerprinting data list stored in the memory with video fingerprinting data list stored in the memory when the determined result of the version determining portion represents that the version information of the video fingerprinting data list recorded on the recording medium is newer than the version information of the video fingerprinting data list stored in the memory.

12. The reproducing apparatus as set forth in claim 11,
wherein the video fingerprinting data list stored in the memory is updated through a copyright managing server connected to the memory through a network.
